# EUROPEAN PATENT APPLICATION

(11) **EP 3 364 357 A1**
(43) Date of publication of application: **22.08.2018**
(21) Application number: 15908114.0
(22) Date of filing: 13.11.2015
(51) Int. Cl.: G06Q 20/20, G06Q 20/32, H04M 11/00, G07F 7/08

(54) **METHOD OF REGISTERING MOBILE POS, CORRESPONDING DEVICE AND SYSTEM**

(71) Applicant: Huawei Technologies Co., Ltd., Longgang District Shenzhen, Guangdong 518129 (CN)
(72) Inventor: ZHAO, Xiaona, Shenzhen Guangdong 518129 (CN); CHANG, Xinmiao, Shenzhen Guangdong 518129 (CN); LI, Guoqing, Shenzhen Guangdong 518129 (CN)
(74) Representative: Gill Jennings & Every LLP
(86) International application number: PCT/CN2015/094618
(87) International publication number: WO 2017/079984

(57) **Abstract**

The present invention discloses a method for registering a mobile POS and a corresponding apparatus and system to resolve a prior-art problem of inconvenience in applying for use of a mobile terminal as a POS. The method includes: receiving, by a mobile terminal, a mobile POS registration instruction; obtaining, by the mobile terminal, first registration data of a user, where the first registration data includes electronic identity information, security environment information of the mobile terminal, and POS associated information, and the POS associated information includes bank card information; sending, by the mobile terminal, a mobile POS registration request to a POS center, where the request includes the first registration data or second registration data obtained after the first registration data is processed, and the first registration data or the second registration data is used by the POS center to determine whether the user and the mobile terminal meet a mobile POS registration condition; and receiving, by the mobile terminal, a registration response result returned by the POS center.

## Description

### TECHNICAL FIELD

The present invention relates to the field of communications technologies, and in particular, to a method for registering a mobile POS and a corresponding apparatus and system.

### BACKGROUND

A point of sale (Point of Sale, POS for short) is a special payee terminal issued by UnionPay, a bank, or a third-party payment institution, and is a device that can receive bank card information, has a communication function, and receives an instruction of a teller to complete exchanging of financial transaction information and related information.

As mobile Internet technologies develop, a technology of using a mobile terminal (such as a smartphone) as a POS emerges currently. This technology is mainly classified into two types: One type is that a mobile phone uses Bluetooth or an audio jack to connect to a dedicated external device, so as to implement a POS function; and the other type is directly purchasing a mobile phone customized by UnionPay or a bank to implement the POS function. Using the mobile terminal as the POS makes a payment transaction extremely convenient. However, a user who wants to use a mobile terminal as a POS needs to go to a financial institution in person for qualification review and identity verification. This takes a lot of time. Applying for use of a mobile terminal as a POS is extremely difficult, especially for a user to which a local financial institution office is unavailable.

### SUMMARY

Embodiments of the present invention provide a method for registering a mobile POS and a corresponding apparatus and system to resolve a prior-art problem of inconvenience in applying for use of a mobile terminal as a POS.

According to a first aspect, the embodiments of the present invention provide a method for registering a mobile point of sale POS, including:
receiving, by a mobile terminal, a mobile POS registration instruction;
obtaining, by the mobile terminal, first registration data of a user, where the first registration data includes electronic identity information, security environment information of the mobile terminal, and POS associated information, and the POS associated information includes bank card information;
sending, by the mobile terminal, a mobile POS registration request to a POS center, where the request includes the first registration data or second registration data obtained after the first registration data is processed, and the first registration data or the second registration data is used by the POS center to determine whether the user and the mobile terminal meet a mobile POS registration condition; and
receiving, by the mobile terminal, a registration response result returned by the POS center.

With reference to the first aspect, in a first possible implementation of the first aspect, the second registration data is data obtained after the mobile terminal uses a key of the POS center to encrypt the first registration data.

With reference to the first aspect or the first possible implementation of the first aspect, in a second possible implementation of the first aspect, the registration response result includes: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

With reference to the second possible implementation of the first aspect, in a third possible implementation of the first aspect, before the mobile terminal receives the registration success message, the method further includes:
receiving, by the mobile terminal, POS terminal data generated by the POS center, where the POS terminal data includes at least one of a POS number, merchant information, or institution information to which the POS terminal data belongs; and
saving, by the mobile terminal, the POS terminal data in a secure memory area of the mobile terminal.

With reference to the third possible implementation of the first aspect, in a fourth possible implementation of the first aspect, the method further includes:
receiving, by the mobile terminal, a mobile POS certificate generated by a certification authority CA center, and saving the mobile POS certificate in the secure memory area of the mobile terminal.

According to a second aspect, the embodiments of the present invention provide a method for registering a mobile POS, including:
receiving, by a mobile terminal, a POS registration instruction;
obtaining, by the mobile terminal, first registration data of a user, where the first registration data includes electronic identity information, security environment information of the mobile terminal, and POS associated information, and the POS associated information includes bank card information;
sending, by the mobile terminal, a POS registration request to a POS center, where the request includes the first registration data or second registration data obtained after the first registration data is processed;
determining, by the POS center according to the first registration data or the second registration data, whether the user and the mobile terminal meet a POS registration condition;
sending, by the POS center, a registration response result to the mobile terminal; and
receiving, by the mobile terminal, the registration response result.

With reference to the second aspect, in a first possible implementation of the second aspect, the second registration data is data obtained after the mobile terminal uses a key of the POS center to encrypt the first registration data; and
the determining, by the POS center according to the second registration data, whether the user and the mobile terminal meet a POS registration condition includes:
decrypting, by the POS center, the second registration data by using a key of the POS center to obtain the first registration data; and
determining, by the POS center according to the first registration data, whether the user and the mobile terminal meet the POS registration condition.

With reference to the second aspect or the first possible implementation of the second aspect, in a second possible implementation of the second aspect, the determining, by the POS center according to the first registration data, whether the user and the mobile terminal meet the POS registration condition includes:
sending, by the POS center, the electronic identity information to an eID center, and receiving a first verification result returned by the eID center for the electronic identity information, where the first verification result indicates that the electronic identity information is valid or invalid;
sending, by the POS center, the security environment information to a security environment management platform, and receiving a second verification result returned by the security environment management platform for the security environment information, where the second verification result indicates that the security environment information is valid or invalid; and
sending, by the POS center, the POS associated information to an institution corresponding to the POS associated information, and receiving a third verification result returned by the institution for the POS associated information, where the third verification result indicates that the POS associated information is valid or invalid; where
when the first verification result indicates that the electronic identity information is valid, the second verification result indicates that the security environment information is valid, and the third verification result indicates that the POS associated information is valid, the POS center determines that the user and the mobile terminal meet the POS registration condition.

With reference to any one of the second aspect, or the first or the second possible implementation of the second aspect, in a third possible implementation of the second aspect, the registration response result includes: a registration success message sent by the POS center after the POS center determines that the user and the mobile terminal meet a mobile POS registration condition, or a registration failure message sent by the POS center after the POS center determines that the user or the mobile terminal does not meet the mobile POS registration condition.

With reference to the third possible implementation of the second aspect, in a fourth possible implementation of the second aspect, before the POS center sends the registration success message, the method further includes:
generating, by the POS center, POS terminal data, where the POS terminal data includes at least one of a POS number, merchant information, or institution information to which the POS terminal data belongs;
sending, by the POS center, the POS terminal data to the mobile terminal; and
receiving, by the mobile terminal, the POS terminal data, and saving the POS terminal data in a secure memory area of the mobile terminal.

With reference to the fourth possible implementation of the second aspect, in a fifth possible implementation of the second aspect, the method further includes:
associating, by the POS center, the POS terminal data with the registration data.

With reference to the fourth or the fifth possible implementation of the second aspect, in a sixth possible implementation of the second aspect, the sending, by the POS center, the POS terminal data to the mobile terminal includes:
sending, by the POS center, the POS terminal data to the mobile terminal by using a secure channel between the POS center and the mobile terminal; or sending, by the POS center, the POS terminal data to the security environment management platform, so that the security environment management platform sends the POS terminal data to the mobile terminal.

With reference to any one of the fourth to the sixth possible implementations of the second aspect, in a seventh possible implementation of the second aspect, the method further includes:
generating, by a CA center, a mobile POS certificate, and sending the mobile POS certificate to the mobile terminal; and
receiving, by the mobile terminal, the mobile POS certificate, and saving the mobile POS certificate in the secure memory area of the mobile terminal.

According to a third aspect, the embodiments of the present invention provide an apparatus for registering a mobile POS, including:
a receiving module, configured to receive a mobile POS registration instruction;
an obtaining module, configured to obtain first registration data of a user, where the first registration data includes electronic identity information, security environment information of the mobile terminal, and POS associated information, and the POS associated information includes bank card information; and
a sending module, configured to send a mobile POS registration request to a POS center, where the request includes the first registration data or second registration data obtained after the first registration data is processed, and the first registration data or the second registration data is used by the POS center to determine whether the user and the mobile terminal meet a mobile POS registration condition; where
the receiving module is further configured to receive a registration response result returned by the POS center.

With reference to the third aspect, in a first possible implementation of the third aspect, the second registration data is data obtained after the mobile terminal uses a key of the POS center to encrypt the first registration data.

With reference to the third aspect or the first possible implementation of the third aspect, in a second possible implementation of the third aspect, the registration response result includes: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

With reference to the second possible implementation of the third aspect, in a third possible implementation of the third aspect, the receiving module is further configured to receive POS terminal data generated by the POS center, where the POS terminal data includes at least one of a POS number, merchant information, and institution information; and
the apparatus further includes a saving module, configured to save the POS terminal data in a secure memory area of the mobile terminal.

With reference to the third possible implementation of the third aspect, in a fourth possible implementation of the third aspect, the receiving module is further configured to receive a mobile POS certificate generated by a CA center; and
the saving module is further configured to save the mobile POS certificate in the secure memory area of the mobile terminal.

According to a fourth aspect, the embodiments of the present invention provide a device for registering a mobile POS, including:
a transceiver, configured to transmit information with a POS center;
a memory, configured to store an instruction; and
a processor, separately connected to the transceiver and the memory, and configured to execute the instruction in the memory so as to perform the following steps when executing the instruction:
   receiving a mobile POS registration instruction;
   obtaining first registration data of a user, where the first registration data includes electronic identity information, security environment information of the mobile terminal, and POS associated information, and the POS associated information includes bank card information;
   instructing the transceiver to send a mobile POS registration request to the POS center, where the request includes the first registration data or second registration data obtained after the first registration data is processed, and the first registration data or the second registration data is used by the POS center to determine whether the user and the mobile terminal meet a mobile POS registration condition; and
   instructing the transceiver to receive a registration response result returned by the POS center.

With reference to the fourth aspect, in a first possible implementation of the fourth aspect, the second registration data is data obtained after the mobile terminal uses a key of the POS center to encrypt the first registration data.

With reference to the fourth aspect or the first possible implementation of the fourth aspect, in a second possible implementation of the fourth aspect, the registration response result includes: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

With reference to the second possible implementation of the fourth aspect, in a third possible implementation of the fourth aspect, before being configured to instruct the transceiver to receive the registration success message, the processor is further configured to:
instruct the transceiver to receive POS terminal data generated by the POS center, where the POS terminal data includes at least one of a POS number, merchant information, or institution information to which the POS terminal data belongs; and
save the POS terminal data in a secure memory area of the mobile terminal.

With reference to the third possible implementation of the fourth aspect, in a fourth possible implementation of the fourth aspect, the receiver is further configured to receive a mobile POS certificate generated by a certification authority CA center; and
the processor is further configured to save the mobile POS certificate in the secure memory area of the mobile terminal.

According to a fifth aspect, the embodiments of the present invention provide a system for registering a mobile POS, including:
a mobile terminal, configured to: receive a POS registration instruction; obtain first registration data of a user, where the first registration data includes electronic identity information, security environment information of the mobile terminal, and POS associated information, and the POS associated information includes bank card information; and send a POS registration request to a POS center, where the request includes the first registration data or second registration data obtained after the first registration data is processed; and
the POS center, configured to: determine, according to the first registration data or the second registration data, whether the user and the mobile terminal meet a POS registration condition; and send a registration response result to the mobile terminal; where
the mobile terminal is further configured to receive the registration response result.

With reference to the fifth aspect, in a first possible implementation of the fifth aspect, the second registration data is data obtained after the mobile terminal uses a key of the POS center to encrypt the first registration data; and
that the POS center is configured to determine, according to the second registration data, whether the user and the mobile terminal meet the POS registration condition includes:
the POS center decrypts the second registration data by using a key of the POS center to obtain the first registration data; and
the POS center determines, according to the first registration data, whether the user and the mobile terminal meet the POS registration condition.

With reference to the fifth aspect or the first possible implementation of the fifth aspect, in a second possible implementation of the fifth aspect, that the POS center is configured to determine, according to the first registration data, whether the user and the mobile terminal meet the POS registration condition includes:
the POS center sends the electronic identity information to an eID center, and receives a first verification result returned by the eID center for the electronic identity information, where the first verification result indicates that the electronic identity information is valid or invalid;
the POS center sends the security environment information to a security environment management platform, and receives a second verification result returned by the security environment management platform for the security environment information, where the second verification result indicates that the security environment information is valid or invalid; and
the POS center sends the POS associated information to an institution corresponding to the POS associated information, and receives a third verification result returned by the institution for the POS associated information, where the third verification result indicates that the POS associated information is valid or invalid; where
when the first verification result indicates that the electronic identity information is valid, the second verification result indicates that the security environment information is valid, and the third verification result indicates that the POS associated information is valid, the POS center determines that the user and the mobile terminal meet the POS registration condition.

With reference to any one of the fifth aspect, or the first or the second possible implementation of the fifth aspect, in a third possible implementation of the fifth aspect, the registration response result includes: a registration success message sent by the POS center after the POS center determines that the user and the mobile terminal meet a mobile POS registration condition, or a registration failure message sent by the POS center after the POS center determines that the user or the mobile terminal does not meet the mobile POS registration condition.

With reference to the third possible implementation of the fifth aspect, in a fourth possible implementation of the fifth aspect, before being configured to send the registration success message to the mobile terminal, the POS center is further configured to: generate POS terminal data, where the POS terminal data includes at least one of a POS number, merchant information, or institution information to which the POS terminal data belongs; and send the POS terminal data to the mobile terminal; and
the mobile terminal is further configured to: receive the POS terminal data, and save the POS terminal data in a secure memory area of the mobile terminal.

With reference to the fourth possible implementation of the fifth aspect, in a fifth possible implementation of the fifth aspect, the POS center is further configured to associate the POS terminal data with the registration data.

With reference to the fourth or the fifth possible implementation of the fifth aspect, in a sixth possible implementation of the fifth aspect, that the POS center is configured to send the POS terminal data to the mobile terminal includes:
the POS center sends the POS terminal data to the mobile terminal by using a secure channel between the POS center and the mobile terminal; or the POS center sends the POS terminal data to the security environment management platform, so that the security environment management platform sends the POS terminal data to the mobile terminal.

With reference to any one of the fourth to the sixth possible implementations of the fifth aspect, in a seventh possible implementation of the fifth aspect, the system further includes:
a CA center, configured to generate a mobile POS certificate, and send the mobile POS certificate to the mobile terminal; and
the mobile terminal is further configured to: receive the mobile POS certificate, and save the mobile POS certificate in the secure memory area of the mobile terminal.

In some possible implementations, the security environment information of the mobile terminal includes first data, where the first data includes at least one of a hardware identifier or a certificate.

In some possible implementations, the security environment information of the mobile terminal includes first encryption data obtained by encrypting first data using a key of the security environment management platform; where
the first data includes at least one of a hardware identifier or a certificate, and the security environment management platform is a platform for managing a security environment of the mobile terminal.

In some possible implementations, the security environment information of the mobile terminal includes: first certification information returned by the security environment management platform for first data, where the mobile terminal sends the first data to the security environment management platform; or the security environment information of the mobile terminal includes: second certification information returned by the security environment management platform for first encryption data, where the first encryption data is obtained by encrypting first data using a key of the security environment management platform, and the mobile terminal sends the first encryption data to the security environment management platform; where
the first data includes at least one of a hardware identifier or a certificate, and the security environment management platform is a platform for managing a security environment of the mobile terminal.

In some possible implementations, the security environment information of the mobile terminal includes: data obtained by encrypting, using a key of the security environment management platform, first certification information that is returned by the security environment management platform for first data, where the mobile terminal sends the first data to the security environment management platform; or the security environment information of the mobile terminal includes: data obtained by encrypting, using a key of the security environment management platform, second certification information that is returned by the security environment management platform for first encryption data, where the first encryption data is obtained by encrypting first data using a key of the security environment management platform, and the mobile terminal sends the first encryption data to the security environment management platform; where
the first data includes at least one of a hardware identifier or a certificate, and the security environment management platform is a platform for managing a security environment of the mobile terminal.

In some possible implementations, the first data further includes: data obtained by performing signature processing on the hardware identifier.

In some possible implementations, the POS associated information further includes: an identifier of the security environment management platform and/or an identifier of the mobile terminal, where the identifier of the security environment management platform and/or the identifier of the mobile terminal are/is used by the POS center to determine the security environment management platform.

In some possible implementations, the electronic identity information includes an electronic identity eID of the user.

In some possible implementation, the electronic identity information includes: second encryption data obtained by encrypting an electronic identity eID of the user by using a key of the eID center, where the eID center is a platform for managing the eID of the user.

In some possible implementations, the electronic identity information includes: third certification information returned by the electronic identity eID center for an eID of the user, where the mobile terminal sends the eID of the user to the eID center; or the electronic identity information includes: fourth certification information returned by the eID center for second encryption data, where the second encryption data is obtained by encrypting an eID of the user by using a key of the eID center, and the mobile terminal sends the second encryption data to the eID center; where
the eID center is a platform for managing the eID of the user.

In some possible implementations, the electronic identity information includes: data obtained by encrypting, using a key of the electronic identity eID center, third certification information that is returned by the eID center for an eID of the user, where the mobile terminal sends the eID of the user to the eID center; or the electronic identity information includes: data obtained by encrypting, using a key of the eID center, fourth certification information that is returned by the eID center for second encryption data, where the second encryption data is obtained by encrypting an eID of the user by using a key of the eID center, and the mobile terminal sends the second encryption data to the eID center; where
the eID center is a platform for managing the eID of the user.

In some possible implementations, the eID of the user is read by the mobile terminal from the secure memory area; or the eID of the user is read by the mobile terminal by means of wireless communications from an apparatus storing the eID.

In some possible implementations, the POS associated information further includes at least one of business certificate information or POS application account information.

One or more technical solutions provided in the embodiments of the present invention have at least the following technical effects or advantages:
In the embodiments of the present invention, after receiving the mobile POS registration instruction, the mobile terminal obtains the registration data required for mobile POS registration, and sends the registration data to the POS center. After verifying that the registration data is valid and determining that the user and the mobile terminal meet the mobile POS registration condition, the POS center sends the registration success message to the mobile terminal to implement online mobile POS registration. Compared with the prior art in which a user needs to go to a POS issuance institution to apply for a mobile POS function in person, the registration method provided in the embodiments of the present invention is more convenient, simplifies user operation, and takes a shorter time. In addition, because of online registration, an applicant can freely select a time for registration, and does not have to make an application in working hours of the POS center.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic structural block diagram of a mobile terminal according to an embodiment of the present invention;
FIG. 2 is a schematic diagram of a system for registering a mobile POS according to an embodiment of the present invention;
FIG. 3 is a schematic flowchart of a method for registering a mobile POS according to an embodiment of the present invention;
FIG. 4 is a detailed schematic flowchart of a method for registering a mobile POS according to an embodiment of the present invention;
FIG. 5 is another detailed schematic flowchart of a method for registering a mobile POS according to an embodiment of the present invention;
FIG. 6 is a schematic flowchart of sending a mobile POS registration request according to an embodiment of the present invention;
FIG. 7 is another schematic flowchart of sending a mobile POS registration request according to an embodiment of the present invention;
FIG. 8 is a schematic flowchart of receiving POS data according to an embodiment of the present invention;
FIG. 9 is another schematic flowchart of receiving POS data according to an embodiment of the present invention; and
FIG. 10 is a schematic structural block diagram of an apparatus for registering a mobile POS according to an embodiment of the present invention.

### DESCRIPTION OF EMBODIMENTS

For ease of understanding of technical solutions provided in the embodiments of the present invention, a mobile terminal and a system in the embodiments of the present invention are introduced first.

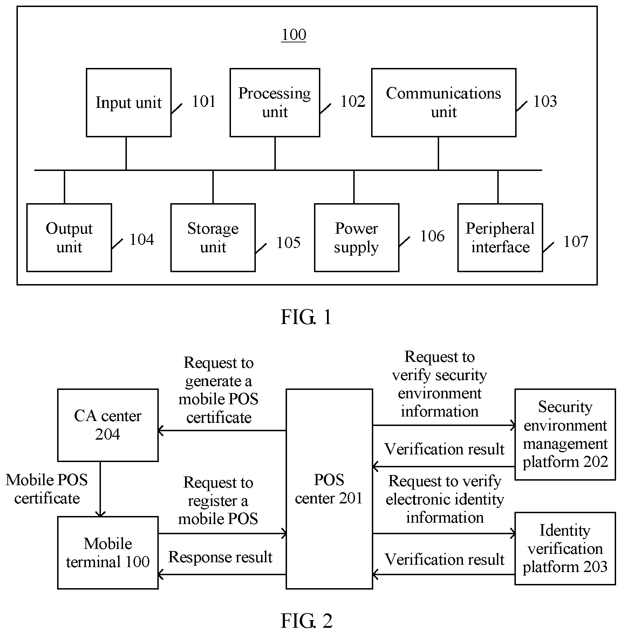

FIG. 1 shows a mobile terminal in a specific implementation according to an embodiment of the present invention. A mobile terminal 100 includes an input unit 101, a processing unit 102, a communications unit 103, an output unit 104, a storage unit 105, a power supply 106, and a peripheral interface 107. These components perform communication by using one or more buses. Persons skilled in the art may understand that the structure of the mobile terminal shown in FIG. 1 imposes no limitation on the present invention. The structure may be a bus structure or a star structure, and may include more or fewer parts than those shown in the figure, or combine some parts, or have a different part arrangement. In this implementation of the present invention, the mobile terminal may be any mobile or portable electronic device, including but not limited to a mobile phone, a mobile computer, a tablet computer, a personal digital assistant (Personal Digital Assistant, PDA for short), a wearable device (Wearable Device), and a combination of the foregoing two or more items.

The input unit 101 is configured to implement interaction between a user and the mobile terminal, and/or enter information to the mobile terminal. For example, the input unit 101 may receive digit or character information entered by the user, so as to generate signal input related to user setting or function control. In this specific implementation of the present invention, the input unit 101 may be a touch panel, may be another man-machine interaction interface such as a substantive input key or a microphone, or may be another external information obtaining apparatus such as a camera. The touch panel, also referred to as a touchscreen, may collect operation actions of the user touching or approaching the touch panel. For example, the user performs an operation action on the touch panel or at a position near the touch panel by using any appropriate object or accessory such as a finger or a stylus, and a corresponding connection apparatus is driven according to a preset program. Optionally, the touch panel may include two parts: a touch detection apparatus and a touch controller. The touch detection apparatus detects a touch operation of the user, converts the detected touch operation into an electrical signal, and transmits the electrical signal to the touch controller. The touch controller receives the electrical signal from the touch detection apparatus, converts the electrical signal into contact coordinates, and then sends the contact coordinates to the processing unit. The touch controller may further receive and execute a command sent by the processing unit. In addition, the touch panel may be implemented by using multiple types such as a resistive type, a capacitive type, an infrared (Infrared) ray, and a surface acoustic wave. In another implementation of the present invention, the substantive input key used by the input unit may include but is not limited to one or more of a physical keyboard, a function key (such as a volume control button or an on/off button), a trackball, a mouse, a joystick, or the like. The input unit in a microphone form may collect audio input by the user or an environment, and convert the audio into a command that is in an electrical signal form and that can be executable by the processing unit.

The processing unit 102 is a control center of the mobile terminal, is connected to each part of the entire mobile terminal by using various interfaces and lines, and performs various functions of the mobile terminal and/or processes data by running or executing a software program and/or a module that are/is stored in the storage unit and invoking data stored in the storage unit. The processing unit 102 may include an integrated circuit (Integrated Circuit, IC for short), for example, may include a single packaged IC, or may include multiple packaged ICs that are connected and that have a same function or different functions. For example, the processing unit may include only a central processing unit (Central Processing Unit, CPU for short), or may be a combination of a graphics processing unit (Graphics Processing Unit, GPU for short), a digital signal processor (Digital Signal Processor, DSP for short), and a control chip (for example, a baseband chip) in the communications unit. In this implementation of the present invention, the CPU may be a single computing core, or may include multiple computing cores.

The communications unit 103 is configured to establish a communications channel, so that the mobile terminal is connected to a remote server by using the communications channel and downloads media data from the remote server. The communications unit may include a communications module such as a wireless local area network (Wireless Local Area Network, WLAN for short) module, a Bluetooth module, a near field communication (Near Field Communication, NFC for short) module, or a baseband (Base Band) module, and include a radio frequency (Radio Frequency, RF for short) circuit corresponding to the communications module; and is configured to perform wireless local area network communication, Bluetooth communication, NFC communication, infrared communication, and/or communication in a cellular communications system, such as a Wideband Code Division Multiple Access (Wideband Code Division Multiple Access, WCDMA for short) and/or High Speed Downlink Packet Access (High Speed Downlink Packet Access, HSDPA for short) system. The communications module is configured to control communication between all the components in the mobile terminal, and may support direct memory access (Direct Memory Access).

The radio frequency circuit is configured to: receive and send information, or receive and send a signal in a call process. For example, after receiving downlink information from a base station, the radio frequency circuit sends the downlink information to the processing unit for processing, and sends related uplink data to the base station. For another example, after receiving information sent by an external NFC device, the radio frequency circuit sends the information to the processing unit for processing, and sends a processing result to the external NFC device. Generally, the radio frequency circuit includes well-known circuits for performing these functions, including but not limited to an antenna system, a radio frequency transceiver, one or more amplifiers, a tuner, one or more oscillators, a digital signal processor, a codec (Codec) chipset, a subscriber identity module (Subscriber Identity Module, SIM for short) card, a memory, and the like. In addition, the radio frequency circuit may further communicate with a network and another device by means of wireless communications. The wireless communications may use any communications standard or protocol, including but not limited to a Global System for Mobile Communications (Global System of Mobile communication, GSM for short), a general packet radio service (General Packet Radio Service, GPRS for short), Code Division Multiple Access (Code Division Multiple Access, CDMA for short), WCDMA, a high speed uplink packet access (High Speed Uplink Packet Access, HSUPA for short) technology, Long Term Evolution (Long Term Evolution, LTE for short), an email, a short message service (Short Messaging Service, SMS for short), and the like.

The output unit 104 includes but is not limited to an image output unit and a voice output unit. The image output unit is configured to output a text, a picture, and/or a video. The image output unit may include a display panel, for example, a display panel configured in a form of a liquid crystal display (Liquid Crystal Display, LCD for short), an organic light-emitting diode (Organic Light-Emitting Diode, OLED for short), a field emission display (Field Emission Display, FED for short), and the like. Alternatively, the image output unit may include a reflective display, for example, an electrophoretic (electrophoretic) display, or a display using an interferometric modulation of light (Interferometric Modulation of Light) technology. The image output unit may include a single display or multiple displays of different sizes. In this specific implementation of the present invention, the touch panel used by the input unit may also be used as a display panel of the output unit. For example, after detecting a gesture operation of touching or approaching on the touch panel, the touch panel transmits the gesture operation to the processing unit to determine a type of a touch event, and then the processing unit provides corresponding visual output on the display panel according to the type of the touch event. In FIG. 1, the input unit 101 and the output unit 104 are used as two independent parts to implement input and output functions of the mobile terminal. However, in some embodiments, the touch panel and the display panel may be integrated to implement the input and output functions of the mobile terminal. For example, the image output unit may display various graphical user interfaces (Graphical User Interface, GUI for short), and use the graphical user interfaces as virtual control components. The graphical user interfaces include but are not limited to a window, a scroll bar, an icon, and a clipboard, so that the user performs an operation in a touch control manner.

The image output unit includes a filter and an amplifier, configured to filter and amplify a video output by the processing unit. The audio output unit includes a digital-to-analog converter, configured to convert an audio signal output by the processing unit from a digital format to an analog format.

The storage unit 105 may be configured to store the software program and the module. By running the software program and the module that are stored in the storage unit 105, the processing unit 102 performs various functional applications of the mobile terminal and processes data. The storage unit 105 mainly includes a program storage area and a data storage area. The program storage area may store an operating system, an application program required by at least one function, such as a voice playing program and an image playing program. The data storage area may store data (such as audio data or a phone book) that is created according to use of the mobile terminal, and the like. In this specific implementation of the present invention, the storage unit may include a volatile memory (Random Access Memory, RAM for short), such as a nonvolatile dynamic random access memory (Nonvolatile RAM, NVRAM for short), a phase change random access memory (Phase Change RAM, PRAM for short), or a magnetoresistive random access memory (Magnetoresistive RAM, MRAM for short), or may further include a nonvolatile memory, such as at least one magnetic disk storage device, an electrically erasable programmable read-only memory (Electrically Erasable Programmable Read-Only Memory, EEPROM for short), or a flash storage device, such as a NOR flash memory (NOR flash memory) or a NAND flash memory (NAND flash memory). The nonvolatile memory stores the operating system and application program executed by the processing unit. The processing unit 102 loads a running program and data from the nonvolatile memory to memory space, and stores digital content in a massive storage apparatus. The operating system includes various components and/or drivers that are configured to control and manage a routine system task, for example, memory management, storage device control, and power management, and that facilitate communication between various types of software and hardware. In this implementation of the present invention, the operating system may be an Android system of Google, an iOS system developed by Apple, a Windows operating system developed by Microsoft, or an embedded operating system such as Vxworks.

The application program includes any application installed on the mobile terminal, and includes but is not limited to a browser, an email, an instant messaging service, word processing, a virtual keyboard, a widget (Widget), encryption, digital rights management, speech recognition, speech reproduction, positioning (for example, a function provided by the Global Positioning System), music play, and the like.

The power supply 106 is configured to supply power to different parts of the mobile terminal to maintain running of the parts. Generally, the power supply 106 may be a built-in battery such as a common lithium-ion battery and a NiMH battery, or includes an external power supply directly supplying power to the mobile terminal, for example, an alternating current (Alternating Current, AC for short) adapter. In some implementations of the present invention, the power supply 106 may further have a wider definition, for example, may further include a power supply management system, a charging system, a power supply fault detection circuit, a power supply converter or inverter, a power supply status indicator (such as a light-emitting diode), and any other components associated with power generation, management, and distribution of the mobile terminal.

The peripheral interface 107 may be a standard micro USB interface, or may be a multi-pin connector. The peripheral interface 107 may be configured to connect the mobile terminal and another apparatus for communication, or may be configured to connect to a charger for charging the mobile terminal. Although FIG. 1 shows the peripheral interface 107, it may be understood that the peripheral interface 107 is not a mandatory component of the mobile terminal, and may be omitted according to a requirement provided that the essence of the present invention is not changed.

The mobile terminal may further include a camera, a flashlight, a gravity acceleration sensor, a proximity sensor, an ambient light sensor, and the like although they are not shown, and details are not described herein.

In this embodiment of the present invention, the mobile terminal has a security environment. An implementation of the security environment may be a secure element (Secure Element, SE for short), may be a trusted execution environment (Trusted Execution Environment, TEE for short), or may be another implementation that can ensure data security.

The SE is a tamper-resistant component that can be used on a smart terminal, ensures security and confidentiality, and provides a multi-application environment supporting various business models. A physical carrier of the SE may be a universal integrated circuit card (Universal Integrated Circuit Card, UICC for short), a secure digital memory card (Secure Digital Memory Card, SD card for short), an embedded (Embedded) SE, or the like.

The TEE is a concept proposed against an open environment (Rich Execution Environment, REE for short) of the mobile terminal. The REE is a running environment of a rich OS (such as the Android system, the iOS system, and the Windows system). A specific implementation of the TEE may be a secure mode of a main processor, or may be a coprocessor isolated from the main processor. Because the TEE has its own execution space, security of the TEE is higher than that of the REE. The TEE is isolated from the REE and an application in the REE to ensure that various types of sensitive data are stored, processed, and protected in a trusted environment. In addition, trusted applications (Trusted Application, TA for short) are loaded in the TEE. The TEE provides a secure execution environment for these TAs, including: execution integrity verification, secure communication with a client application (Client Application, Client App for short) in the REE environment, trusted storage, input/output with an external secure user, key and encryption algorithm management, time management, and the like.

A TA is an application that runs in the TEE and can provide a security-related service for the client app in the REE or another TA in the TEE. The client app runs in the REE, and may invoke or visit the TA in the TEE by using an application programming interface (Application Programming Interface, API for short) of a TEE client. For details, refer to the TEE Client API Specification formulated by the Global Platform standard organization.

FIG. 2 is a schematic diagram of a possible implementation of a system for registering a mobile POS according to an embodiment of the present invention. The system includes: a mobile terminal 100, a POS center 201, a security environment management platform 202, an identity verification platform 203, and a certification authority (Certification Authority, CA for short) center 204. The following separately describes the components.

The mobile terminal 100 is configured to request, according to an instruction of a user, the POS center to perform mobile POS registration. A mobile POS registration operation may include: The mobile terminal submits registration data, including electronic identity information of the user (such as a merchant), security environment information of the mobile terminal, and POS associated information, to the POS center by using a POS application; and the POS center certifies the user and the mobile terminal according to the received registration data, and performs a mobile POS personalization process (including POS data generation and delivery) after the certification succeeds. After the mobile POS registration operation succeeds, the user (such as the merchant) of the mobile terminal can open the POS application to sign in (that is, verify validity of the merchant and a mobile POS). If the sign-in succeeds, it means that the merchant can normally use the mobile POS to accept a corresponding type of card (for example, financial IC cards issued by various banks and industrial IC cards issued by industries such as public transit and stores and supermarkets). Therefore, the mobile POS registration operation may be understood as a process of performing POS preparation on the mobile terminal so that the mobile terminal can normally operate as a mobile POS.

The POS center 201 is an institution that accepts, processes, or forwards POS transaction request information, and returns transaction result information to a POS device. In this embodiment of the present invention, the POS center is further configured to review a mobile POS registration request, and deliver a review result.

Optionally, in this embodiment of the present invention, the POS center is further configured to perform centralized management for the mobile POS, for example, download a parameter and download a key. The parameter includes but is not limited to data generated in the POS personalization process, for example, at least one of a POS number, a POS certificate, institution information, or merchant information. The parameter may further include a support capability of an online payment password, a POS-supported card application list, a quantity of retries allowed when communication fails, information related to a public key of the CA center, and the like. For details, refer to China UnionPay POS terminal specification. The key includes but is not limited to a master key, mainly used to encrypt a working key when the mobile POS operates. In conclusion, the POS center may be a system that performs centralized management and transaction processing on the mobile POS.

The security environment management platform 202 is an external entity managing a security environment of the mobile terminal. An implementation of the security environment management platform is a trusted service manager (Trusted Service Manager, TSM for short) platform, which is a trusted public open service platform that provides issuance and management services of various applications based on the security environment for various industries. The TSM platform supports access of various services, has a capability of providing application issuance and management services for self-owned and third-party service platforms, certifies and authorizes a service application (such as the POS application) to use a related service capability of the service application, and provides secure application issuance and application management means for the service application. In this embodiment of the present invention, the security environment management platform may be specifically a TSM platform corresponding to a TEE and an SE, or may be another platform that has a same or similar function as the TSM platform and that can manage the security environment of the mobile terminal. Examples are not provided one by one herein.

The identity verification platform 203 is configured to authenticate electronic identity information of the user. An implementation of the identity verification platform is an electronic identity (Electronic Identity, eID for short) center, which is a system that provides services related to full-service life-cycle service processing, for example, eID generation, storage, use, and maintenance. An eID is an electronic identifier used to identify a citizen identity online on the Internet, is carried on a smart security chip, and has a one-to-one correspondence with an authentic citizen identity based on a password technology. It should be noted that, in this embodiment of the present invention, information used to indicate a user identity may not only be the electronic identity eID, but also may certainly include information such as a resident identity card and a passport. In the following specific embodiments, only the eID is used as an example.

The CA center 204 is a trusted third-party institution used to prove that a public key and other related information are associated with their owner. The public key (Public Key) is a key that can be disclosed in an asymmetric key pair used by an entity. A certificate (Certificate) is unforgeable data formed by signing, by a certification authority issuing the certificate, the public key, identity information, and other related information of the entity by using a private key of the certification authority, for example, a public key certificate (that is, unforgeable public key information of an entity that is signed by the CA center).

Optionally, in this embodiment of the present invention, the system may further include institutions such as a bank and an industrial and commercial information management platform, configured to verify the POS associated information submitted by the mobile terminal to the POS center.

### Embodiment 1

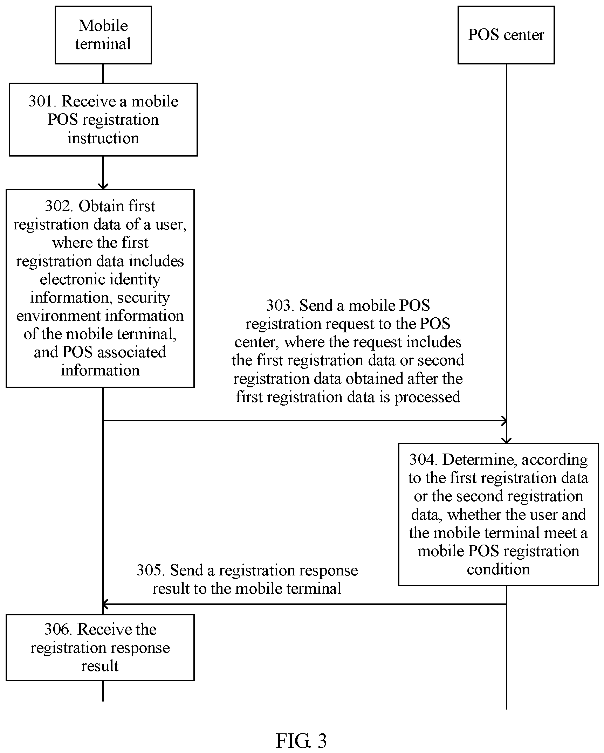

FIG. 3 is a schematic flowchart of a method for registering a mobile POS according to an embodiment of the present invention, including the following steps:
Step 301: A mobile terminal receives a mobile POS registration instruction.
Step 302: The mobile terminal obtains first registration data of a user, where the first registration data includes electronic identity information, security environment information of the mobile terminal, and POS associated information, and the POS associated information includes bank card information.
Step 303: The mobile terminal sends a mobile POS registration request to a POS center, where the request includes the first registration data or second registration data obtained after the first registration data is processed.
Step 304: The POS center determines, according to the first registration data or the second registration data, whether the user and the mobile terminal meet a mobile POS registration condition.
Step 305: The POS center sends a registration response result to the mobile terminal.
Step 306: The mobile terminal receives the registration response result.

In this embodiment of the present invention, a mobile POS means that the mobile terminal is used as a POS device, or the mobile terminal is enabled to have a POS function, so that a merchant can use the mobile terminal having a POS application to accept a corresponding type of card (such as a financial IC card and an industrial IC card), so as to complete a corresponding transaction. The financial IC card includes but is not limited to a debit card and a credit card. The industrial IC card includes but is not limited to a transportation card and a prepaid card for a store or a supermarket. The POS application is downloaded by the user of the mobile terminal to the mobile terminal by using an application market or a web page or in a desktop shortcut installation manner, or is preinstalled on the mobile terminal when the mobile terminal is delivered from a factory. The POS application may be understood as a dedicated POS application that accepts a single type of card (the financial IC card or the industrial IC card), or may be understood as a universal POS application that can accept different types of cards.

In this embodiment of the present invention, mobile POS registration means that the mobile terminal provides registration data for a POS issuance institution, and requests the POS issuance institution to register the POS function for the mobile terminal. The POS issuance institution is the POS center.

In step 301, that the mobile terminal receives the mobile POS registration instruction includes the following implementations: In a first implementation, the mobile terminal may receive, by using an input unit 101, a mobile POS registration instruction entered by the user. For example, the input unit 101 is a microphone. The microphone receives audio "mobile POS registration" that is input by the user, that is, the mobile POS registration instruction. For another example, the input unit 101 is a touchscreen. The touchscreen detects and obtains the user's selection operation on a "mobile POS registration" option displayed on the touchscreen, that is, receives the mobile POS registration instruction. Persons skilled in the art can learn, according to the description about the implementation of the input unit 101, an implementation of receiving the mobile POS registration instruction by using the input unit 101. No example is provided in this embodiment of the present invention.

In a second implementation, the user may send the mobile POS registration instruction to the mobile terminal by using a second terminal connected to the mobile terminal. The mobile terminal receives the instruction by using a communications unit 103. For example, the mobile terminal is a smartphone, the second terminal is a smartwatch, and the user sends the mobile POS registration instruction to the smartphone by using the smartwatch.

In step 302, the mobile terminal obtains the first registration data, that is, information that needs to be submitted for mobile POS registration. The first registration data includes: the electronic identity information of the user, the security environment information of the mobile terminal, and the POS associated information. The electronic identity information is an eID of the user, or information obtained based on the eID. The security environment information is information that represents a security environment of the mobile terminal, for example, a hardware identifier of the security environment, a certificate of the security environment, and a signature of the hardware identifier, or is information obtained based on the hardware identifier, the certificate, and the signature. The POS associated information includes the bank card information, that is, information about a bank card used for a POS payment function, for example, an account of the bank card.

In step 303, the mobile terminal sends the mobile POS registration request to the POS center. The request includes the first registration data or the second registration data. The second registration data is the data obtained after the first registration data is processed. For example, the second data is data obtained after the first data is encrypted, or data obtained after the first data is encoded, or the second data is data after the first data is compressed. A processing algorithm for the first data is reversible. That is, the POS center can perform a reverse operation on the second registration data to obtain the first registration data.

For example, the first registration data is the electronic identity information, the security environment information, and the POS associated information. Step 302 and step 303 include but are not limited to the following implementations:
In a first implementation, the mobile terminal first performs step 302 and then performs step 303 to simultaneously send the electronic identity information, the security environment information, and the POS associated information to the POS center.

In a second implementation, the electronic identity information, the security environment information, and the POS associated information have different priorities. The mobile terminal first obtains data with a highest priority in the three pieces of information, and then sends the mobile POS registration request to the POS center. The request carries the data with the highest priority. Then the POS center verifies whether the data with the highest priority is valid. If the data is valid, the POS center sends a verification success message to the mobile terminal. The mobile terminal receives the verification success message, obtains data with a second highest priority in the three pieces of information, and sends the data to the POS center. After the POS center delivers a verification success message, the mobile terminal further obtains data with a lowest priority, and sends the data to the POS center for verification.

A variation of the foregoing manner is: After sending the data with the highest priority to the POS center, the mobile terminal may first perform the step of obtaining the data with the second highest priority before the POS center returns verification success.

In a third implementation, after obtaining the electronic identity information, the security environment information, and the POS associated information, the mobile terminal sends the mobile POS registration request to the POS center, where the request first carries the data with the highest priority in the three pieces of information; and then sends the data with the second highest priority after verification succeeds, and so on.

In a fourth implementation, the mobile terminal sends the mobile POS registration request to the POS center, where the request may include only POS application account information. Then the POS center may send a registration data obtaining request to the mobile terminal once or in sequence. The mobile terminal responds to the registration data obtaining request, and submits information included in the registration data once or in sequence. The information included in the registration data may be obtained by the mobile terminal in advance, or may be obtained once or in sequence after the mobile terminal receives the registration data obtaining request sent by the POS center once or in sequence.

In an actual situation, when the mobile POS registration request includes the second registration data, step 303 may be performed in a manner similar to the four implementations. Details are not described herein again.

The present invention is intended to protect all the implementations. In addition, when the electronic identity information, the security environment information, and the POS associated information have different priorities, a specific priority sequence of the three pieces of information is not limited in this embodiment of the present invention. That is, one of the three that is first sent to the POS center is not limited, or one of the three that is requested by the POS center from the mobile terminal is not limited.

In step 304, the POS center verifies validity of the registration data. Implementations of step 304 may be as follows: In a first implementation, the POS center separately sends a verification request to a platform corresponding to each piece of information in the registration data, so as to separately request to verify each piece of information. For example, a request for verifying validity of the security environment information is sent to a security environment management platform (such as a TSM platform). A request for verifying validity of the electronic identity information is sent to an identity verification platform (such as an eID center). A request for verifying bank card validity or verifying association between a bank card and user identity information is sent to a bank. In a second implementation, the POS center stores a mirror of databases of the registration data management institutions (that is, the TSM platform, the eID center, and the like). The POS center verifies the validity of the registration data according to the mirror.

In step 305, after verifying the first registration data or the second registration data included in the POS registration request, the POS center generates the registration response result for the mobile POS registration request according to a verification result.

Specifically, if the POS center determines that all registration data is valid, it indicates that the user and the mobile terminal meet the mobile POS registration condition. The POS center delivers a registration success message to the mobile terminal. On the contrary, if at least one piece in the registration data is invalid, it indicates that the user or the mobile terminal does not meet the mobile POS registration condition. The POS center sends a registration failure message to the mobile terminal. In an actual situation, the registration response result may alternatively be a notification for delayed request processing, a notification indicating that the registration data reported by the user does not meet a requirement, a notification that requests the user to supplement the registration data, or the like.

In the technical solution, after receiving the mobile POS registration instruction, the mobile terminal obtains the registration data required for mobile POS registration, and sends the registration data to the POS center. After verifying that the registration data is valid and determining that the user and the mobile terminal meet the mobile POS registration condition, the POS center may send the registration success message to the mobile terminal to implement online mobile POS registration. Compared with the prior art in which a user needs to go to a POS issuance institution to apply for a mobile POS function in person, the registration method provided in this embodiment of the present invention is more convenient, simplifies user operation, and takes a shorter time. In addition, because of online registration, an applicant can freely select a time for registration, and does not have to make an application in working hours of the POS center.

In addition, in the prior art, implementations of a mobile POS are as follows: In a first implementation, a mobile terminal is connected to an external device having a POS function, such as a mobile card reader provided by Square. The external device is inserted into an audio jack of a mobile phone, so that the mobile phone has the POS function. In a second implementation, the POS issuance institution preinstalls a POS certificate in a customized mobile terminal, that is, customizes a mobile terminal having the POS function. In the first implementation, data is transmitted slowly between the mobile terminal and the external device. In the second implementation, customization and distribution channels are relatively limited. In addition, costs of both manners are relatively high. In the technical solution provided in this embodiment of the present invention, because an online registration manner is used, a mobile terminal can be registered as a mobile POS provided that a security environment of the mobile terminal can meet a requirement of the POS center. This greatly reduces costs of the mobile POS and facilitates promotion and application of the mobile POS.

Optionally, in this embodiment of the present invention, the second registration data is data obtained after the mobile terminal uses a key of the POS center to encrypt the first registration data. The key used for the encryption may be a symmetric key of the POS center, or may be a public key in a private-public key pair of the POS center.

Correspondingly, that the POS center determines, according to the registration data, whether the user and the mobile terminal meet the POS registration condition in step 304 includes the following steps:
The POS center decrypts the second registration data by using a key of the POS center to obtain the first registration data; and
the POS center determines, according to the first registration data, whether the user and the mobile terminal meet the POS registration condition.

Specifically, the mobile terminal uses the key of the POS center to encrypt the first registration data, and sends the second registration data obtained after the encryption to the POS center. The POS center first decrypts the second registration data, and then determines, according to the first registration data obtained after the decryption, whether the user and the mobile terminal meet the POS registration condition. The corresponding encryption and decryption processes prevent data related to mobile POS registration from being stolen, so as to ensure data security.

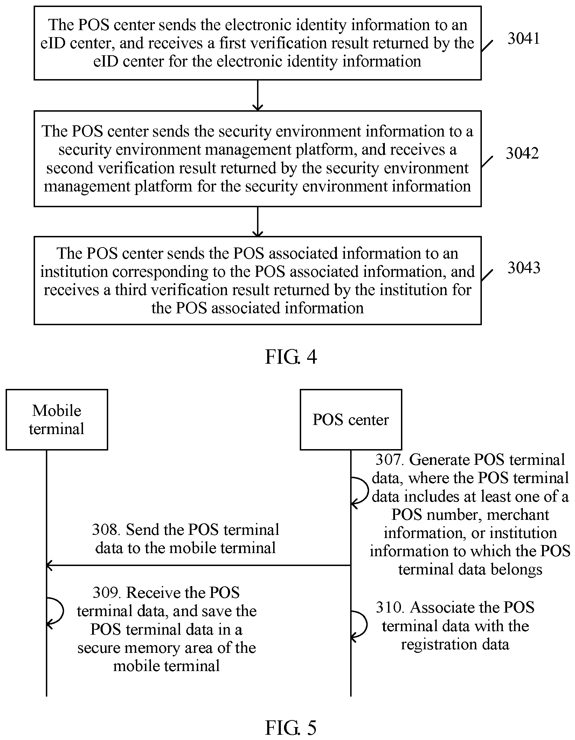

Optionally, in this embodiment of the present invention, referring to FIG. 4, that the POS center determines, according to the first registration data, whether the user and the mobile terminal meet the mobile POS registration condition includes the following steps during specific implementation:
Step 3041: The POS center sends the electronic identity information to an eID center, and receives a first verification result returned by the eID center for the electronic identity information, where the first verification result indicates that the electronic identity information is valid or invalid.
Step 3042: The POS center sends the security environment information to a security environment management platform, and receives a second verification result returned by the security environment management platform for the security environment information, where the second verification result indicates that the security environment information is valid or invalid.
Step 3043: The POS center sends the POS associated information to an institution corresponding to the POS associated information, and receives a third verification result returned by the institution for the POS associated information, where the third verification result indicates that the POS associated information is valid or invalid.

When the first verification result indicates that the electronic identity information is valid, the second verification result indicates that the security environment information is valid, and the third verification result indicates that the POS associated information is valid, the POS center determines that the user and the mobile terminal meet the mobile POS registration condition.

Specifically, a sequence of performing the steps may be as follows: Firstly, step 3041, step 3042, and step 3043 are performed simultaneously. In a second manner, a step with a highest priority in step 3041, step 3042, and step 3043 is performed first; after a verification success message corresponding to the step is received, a step with a second highest priority in the three steps are performed; and after a response success message corresponding to the step with the second highest priority is received, a step with a third highest priority in the three steps is performed.

It should be noted that, in the second manner, a specific priority sequence of the three steps is not limited in this embodiment of the present invention.

In addition, if a verification result obtained in any one of step 3041, step 3042, and step 3043 indicates that verified information is invalid, the verification procedure can be terminated immediately, and it is determined that the user or the mobile terminal does not meet the mobile POS registration condition. The POS center sends the registration failure message to the mobile terminal to save computation resources and transmission resources of the POS center.

Optionally, in this embodiment of the present invention, the registration failure message further carries failure prompt information. The failure prompt information specifies data that does not meet the requirement in the registration data submitted by the mobile terminal, so that the mobile terminal can perform a corresponding adjustment, and submit registration data that meets the requirement to the POS center when performing mobile POS registration next time.

Optionally, in this embodiment of the present invention, when the security environment management platform receives the verification request sent by the POS center and verifies the security environment information, if the security environment information is the first data, the security environment management platform directly queries a database to verify authenticity of the first data. If the security environment information is first certification information or second certification information, the security environment management platform queries previously saved certification information to verify authenticity of the certification information. If the security environment information is data encrypted by using a key of the security environment management platform, the security environment management platform first decrypts the data, and then verifies authenticity of decrypted data.

Optionally, in this embodiment of the present invention, when the eID center receives the verification request sent by the POS center and verifies the electronic identity information, if the electronic identity information is the eID, the eID center directly queries a database to verify authenticity of the eID. If the electronic identity information is third certification information or fourth certification information, the eID center queries previously saved certification information to verify authenticity of the certification information. If the electronic identity information is data encrypted by using a key of the eID center, the eID center first decrypts the data, and then verifies authenticity of decrypted data.

Optionally, in this embodiment of the present invention, that the POS center verifies whether the POS associated information is valid includes but is not limited to the following cases: The POS center sends the bank card information to a bank, and requests the bank to query whether the bank card exists and whether the bank card is valid; or the POS center sends the bank card information and the electronic identity information to a bank or an identity certification platform, and requests the bank or the identity certification platform to confirm whether the bank card is associated with the electronic identity information; or the POS center sends business certificate information to a network platform of an industry and commerce authority, and requests to verify whether the business certificate information is authentic, or requests to confirm, according to the business certificate information, whether a commercial entity corresponding to the user meets the mobile POS registration condition; or the POS center verifies whether a POS application account is valid; or the POS center sends an identifier of the mobile terminal to the security environment management platform to verify whether the mobile terminal has a function required by a mobile POS or has a hardware module required by a mobile POS.

It should be noted that, that the POS center sends the bank card information and the electronic identity information to the bank or the identity verification platform, and requests the bank or the identity verification platform to confirm whether the bank card is associated with the electronic identity information is described with reference to an example as follows:
For example, if the eID of the user is registered and issued by a bank to which the bank card belongs, both a backend of the bank and the eID center POS store a correspondence between the eID and the bank card. Therefore, the POS center may submit the eID information and the bank card information to the eID center or the backend of the bank for check.

For another example, if the eID of the user is not registered and issued by the bank to which the bank card belongs, but the bank card is applied for by using the eID, the POS center may forward the eID information and the bank card information to the backend of the bank for check.

For still another example, if the eID of the user is not registered and issued by the bank to which the bank card belongs, and the bank card is applied for by using an authentic identity card (for example, a second-generation identity card) of the user, the POS center may forward the eID information and the bank card information to the backend of the bank, and then the backend of the bank forwards the eID and information about the authentic identity card of the user to the eID center, so as to request the eID center to certify association between the two pieces of information. Optionally, in this embodiment of the present invention, the registration response result includes: the registration success message sent by the POS center after the POS center determines that the user and the mobile terminal meet the mobile POS registration condition, or the registration failure message sent by the POS center after the POS center determines that the user or the mobile terminal does not meet the mobile POS registration condition.

Optionally, in this embodiment of the present invention, before step 305, referring to FIG. 5, the following steps are further included:
Step 307: The POS center generates POS terminal data, where the POS terminal data includes at least one of a POS number, merchant information, or institution information to which the POS terminal data belongs.
Step 308: The POS center sends the POS terminal data to the mobile terminal.
Step 309: The mobile terminal receives the POS terminal data, and saves the POS terminal data in a secure memory area of the mobile terminal.

Specifically, after confirming that the user and the mobile terminal meet the POS registration condition, the POS center generates the POS terminal data according to the registration data submitted by the mobile terminal. The POS terminal data may include at least one of the POS number, the merchant information, or the institution information. The POS number is a unique identifier assigned by the POS center. The merchant information is information related to a merchant to which the mobile POS function of the mobile terminal belongs, for example, a merchant number used to uniquely identify the merchant or a merchant classification code used to indicate a type of business (for example, supermarket, restaurant, or hotel) in which the merchant is engaged. The institution information is information related to an institution (that is, an acquiring bank or a POS application issuer) to which the mobile POS function of the mobile terminal belongs, for example, an acquiring bank identifier used to uniquely identify the acquiring bank, an issuer identifier used to uniquely identify the POS application issuer, a location identifier used to indicate a country or a region in which the acquiring bank or the POS application issuer is located, and time information used to indicate a time point at which mobile POS registration succeeds. In addition, in an actual situation, the POS terminal data may further include the following data: a timeout interval used to indicate a maximum time period in which the mobile POS waits for the POS center to answer; a quantity of retries used to indicate a maximum quantity of times the mobile POS can reinitiate a transaction request after communication fails; an application identifier AID list used to indicate a list of card applications supported by the mobile POS; an index of a public key certificate of a certification authority CA center, used by the mobile POS to search for the public key certificate of the CA center; and the like. For details, refer to China UnionPay POS terminal specification. Details are not described in this embodiment of the present invention.

Then the POS center sends the POS terminal data to the mobile terminal. The mobile terminal saves the POS terminal data in the secure memory area, so as to use the mobile POS function according to the POS terminal data.

Optionally, in this embodiment of the present invention, referring to FIG. 5 again, the following step is further included:
Step 310: The POS center associates the POS terminal data with the registration data.

Specifically, step 310 is performed after step 307, may be performed together with step 308, may be performed before step 308, or may be performed after step 308. This is not limited in this embodiment of the present invention.

The association operation in step 310 may be that the POS center associates the POS terminal data with all or some information in the registration information. The association operation may allow the POS center to map data related to the POS application (POS terminal data, or including the POS application account) with identity information of the user (that is, the merchant) and the security environment information of the mobile phone. That is, the POS application, the user (that is, the merchant), and the mobile terminal can be associated, so that the POS center traces, according to a financial service completed by using the mobile POS, the merchant and the mobile terminal corresponding to the mobile POS.

Optionally, in this embodiment of the present invention, that the POS center sends the POS terminal data to the mobile terminal in step 308 includes but is not limited to the following implementations during specific implementation:
In a first implementation, the POS center sends the POS terminal data to the mobile terminal by using a secure channel between the POS center and the mobile terminal.

Specifically, establishment of the secure channel may be applied for by the mobile terminal to the security environment management platform that manages a security domain in which the POS application is located. Alternatively, the secure channel is directly established with the security domain in which the POS application is located after the POS center applies for and become an authorized platform of a security management platform. The POS center delivers, by using the secure channel, the POS terminal data to the security domain for storage, so as to ensure security of the POS terminal data.

In a second implementation, the POS center sends the POS terminal data to the security environment management platform, so that the security environment management platform sends the POS terminal data to the mobile terminal.

Specifically, because the security environment management platform can transmit data with the mobile terminal by using a secure communication link, the POS center may send the POS terminal data to the security environment management platform, so that the security environment management platform forwards the POS terminal data to the mobile terminal, so as to ensure security of the POS terminal data.

A third implementation is similar to the second implementation. A difference lies in that a security management platform entrusted by the POS center is a platform for managing the security domain in which the POS application is located. The security domain in which the POS application is located is a secure space for installing the POS application and is one of a plurality of security domains that are divided from the security environment of the mobile terminal. In the second implementation, data delivered by the security environment management platform to the mobile terminal may be further forwarded, in the security environment, to the security domain in which the POS application is located for storage. In the third implementation, the data delivered to the mobile terminal is directly delivered to the security domain in which the POS application is located for storage.

Optionally, in this embodiment of the present invention, the following steps are further included:
The CA center generates a mobile POS certificate, and sends the mobile POS certificate to the mobile terminal; and
the mobile terminal receives the mobile POS certificate, and saves the mobile POS certificate in the secure memory area of the mobile terminal.

Specifically, the CA center generates the mobile POS certificate, and the mobile terminal receives and saves the mobile POS certificate, so as to ensure security of the POS terminal data. In an actual situation, the POS center may send a mobile POS certificate generation request to the CA center, or the mobile terminal itself may apply to the CA center for the POS certificate after receiving the POS terminal data.

That the CA center generates the POS certificate may be implemented in an existing manner. That is, the CA center requests a certificate entity (that is, the mobile terminal or the mobile POS) to generate a private-public key pair of the certificate entity. Then the mobile terminal (that is, the mobile POS) sends a public key in the private-public key pair to the CA center. The CA center uses the public key to generate the mobile POS certificate (that is, the certificate includes at least the public key and a signature obtained after the CA center uses a private key of the CA center to encrypt the public key).

In addition, in a first implementation, after being authorized by the security environment management platform, the CA center sends the mobile POS certificate to the mobile terminal by using a secure channel established between the CA center and the mobile terminal. In a second implementation, the CA center sends the mobile POS certificate to the security environment management platform, and requests the security environment management platform to forward the mobile POS certificate to the mobile terminal by using a secure channel between the security environment management platform and the mobile terminal.

Optionally, in this embodiment of the present invention, implementations of the security environment information of the mobile terminal include but are not limited to the following:

In Manner 1: The security environment information of the mobile terminal includes first data, where the first data includes at least one of a hardware identifier or a certificate.

Specifically, the mobile terminal may directly obtain the first data from the security environment, or may read the first data from a secure memory area that stores the first data on the mobile terminal. The first data may be the hardware identifier, or may be the certificate, or may include both the hardware identifier and the certificate. When the first data includes only the certificate, the certificate needs to include the hardware identifier of the security environment. The hardware identifier is information that uniquely identifies the security environment, and is written by a vendor of the mobile terminal or a vendor of the security environment before factory delivery. The certificate may be a public key certificate generated by the CA center for the security environment, and is applied for and written by the vendor of the mobile terminal or the vendor of the security environment before factory delivery.

In Manner 2: The security environment information of the mobile terminal includes: first certification information returned by the security environment management platform for first data, where the mobile terminal sends the first data to the security environment management platform.

Specifically, the mobile terminal sends the first data to the security environment management platform, so that the security environment management platform certifies the first data. After the certification succeeds, the security environment management platform sends the first verification information to the mobile terminal, where the first verification information is used to indicate that the first data is verified successfully. The security environment management platform is used to certify the first data, and the obtained first verification information is used as the security environment information, so as to prevent the security environment information from being disclosed and enhance security of the security environment information.

In Manner 3: The security environment information of the mobile terminal includes first encryption data obtained by encrypting first data using a key of the security environment management platform.

Specifically, the key of the security environment management platform may be a symmetric key of the security environment management platform, or may be a public key in a private-public key pair (that is, an asymmetric key) of the security environment management platform. The key of the security environment management platform is used to encrypt the first data, and the obtained first encryption data is used as the security environment information, so as to prevent the security environment information from being disclosed and enhance security of the security environment information.

In Manner 4: The security environment information of the mobile terminal includes: second certification information returned by the security environment management platform for first encryption data, where the mobile terminal sends the first encryption data to the security environment management platform.

Specifically, the mobile terminal first uses a key of the security environment management platform to encrypt first data to obtain the first encryption data, and then sends the first encryption data to the security environment management platform for certification, so as to ensure that information sent to the security environment management platform for certification is not stolen. After receiving the first encryption data, the security environment management platform first decrypts the first encryption data (if the mobile terminal uses a symmetric key for encryption, the security environment management platform uses the symmetric key for decryption; or if the mobile terminal uses a public key of the security environment management platform for encryption, the security environment management platform uses a corresponding private key for decryption), certifies the first data obtained after the decryption, and if the certification succeeds, sends the second certification information to the mobile terminal. The key of the security environment management platform is used to encrypt the first data, the obtained first encryption data is sent to the security environment management platform for certification, and the obtained second certification information is used as the security environment information, so as to prevent the security environment information from being stolen and ensure data security.

In Manner 5: The security environment information of the mobile terminal includes: data obtained by encrypting first certification information or second certification information using a key of the security environment management platform. The key of the security environment management platform is used to encrypt the certification information to further ensure security of the security environment information.

Optionally, the first and second certification information is dynamic, that is, is valid once, to further enhance privacy of the security environment information.

It should be noted that the related encryption operation may be performed by a TA running in a TEE, or may be performed by a client app running in an REE. This is not limited in this embodiment of the present invention. In addition, the certification communication with the security environment management platform may be performed by the TA in the TEE, or may be performed by the client app running in the REE. This is not limited in this embodiment of the present invention.

Optionally, in Manner 3 or Manner 4, when returning the certification information to the mobile terminal, the security environment management platform further sends the certification information to the POS center, so that when receiving the security environment information sent by the mobile terminal, the POS center verifies, according to the certification information sent by the security environment management platform, authenticity of certification information sent by the mobile terminal. That is, after receiving the security environment information sent by the mobile terminal, the POS center does not need to forward the security environment information to the security environment management platform for verification, but directly performs verification itself.

Optionally, in this embodiment of the present invention, in Manner 1 to Manner 5 of implementing the security environment information, the first data further includes data obtained by performing signature processing on the hardware identifier, that is, a signature of the hardware identifier. A manner of obtaining the signature may be as follows: The mobile terminal computes a digest of the hardware identifier, and obtains the signature by encrypting the digest using a key of the security environment. The key of the security environment may be a symmetric key, or may be a private key, which is an asymmetric key. The signature of the hardware identifier is generated to prevent the hardware identifier from being tampered with and enhance security of the security environment information, that is, ensure authenticity and integrity of the security environment information.

Optionally, in this embodiment of the present invention, the POS associated information further includes: an identifier of the security environment management platform and/or the identifier of the mobile terminal.

Specifically, in an actual situation, there may be more than one security environment management platform. The registration data needs to carry identifier information that allows the POS center to locate a security environment management platform that verifies the validity of the security environment information. Specifically, the identifier of the security environment management platform may be added in the registration data. The identifier may be stored in hardware (or attribute information of hardware) of the security environment, or may be stored in the secure memory area of the mobile terminal. Alternatively, the mobile terminal may obtain the identifier from the security environment management platform that manages the security environment of the mobile terminal.

In addition, usually, a mobile terminal of a brand or a mobile terminal of a model is uniquely corresponding to a security environment management platform. Therefore, the identifier of the mobile terminal may be added in the registration data. The POS center may determine, according to a correspondence between the identifier of the mobile terminal and the identifier of the security environment management platform, the security environment management platform that verifies the security environment information. The identifier of the mobile terminal includes but is not limited to an international mobile equipment identity (International Mobile Equipment Identity, IMEI for short) and a mobile number.

In addition, in a possible implementation of this embodiment of the present invention, the identifier of the mobile terminal may be further used to: determine whether the mobile terminal has a related hardware module required by the mobile POS, for example, a non-contact card reading interface (such as a near field communication NFC interface), a Bluetooth interface, and a display.

Specifically, the POS center may query the identifier of the mobile terminal in a stored configuration database of the mobile terminal to determine whether the mobile terminal has the related hardware module required by the mobile POS. Alternatively, the POS center sends the identifier of the mobile terminal to the security environment management platform, and requests the security environment management platform to determine whether the mobile terminal has the related hardware module required by the mobile POS.

Optionally, in this embodiment of the present invention, implementations of the electronic identity information of the user include but are not limited to the following:
In a first implementation, the electronic identity information includes the eID of the user.

In a second implementation, the electronic identity information includes: third certification information returned by the eID center for the eID of the user, where the mobile terminal sends the eID of the user to the eID center. The eID center is used to certify eID data, and the obtained third certification information is used as the electronic identity information, so as to ensure that the electronic identity information is not stolen and enhance security of the electronic identity information.

In a third implementation, the electronic identity information includes: second encryption data obtained by encrypting the eID of the user by using a key of the eID center. The key used by the mobile terminal to encrypt the eID may be a symmetric key of the eID center, or may be a public key of the eID center. The key of the eID center is used to encrypt the eID data, and the obtained second encryption information is used as the electronic identity information, so as to ensure that the electronic identity information is not stolen by others and enhance security of the electronic identity information.

In a fourth implementation, the electronic identity information includes: fourth certification information returned by the eID center for second encryption data, where the mobile terminal sends the second encryption data to the eID center. A key of the eID center is used to encrypt the eID data, the obtained second encryption data is sent to the eID center for certification, and the obtained fourth certification information is used as the electronic identity information, so as to prevent the electronic identity information from being stolen and ensure data security.

In a fifth implementation, the electronic identity information includes: data obtained by encrypting third certification information or fourth certification information using a key of the eID center. The key of the eID center is used to encrypt the certification information to further ensure security of the electronic identity information.

Optionally, the third and fourth certification information is dynamic, that is, is valid once, to further enhance privacy of the security environment information.

It should be noted that the related encryption operation may be performed by the TA running in the TEE, or may be performed by the client app running in the REE. This is not limited in this embodiment of the present invention. In addition, the certification communication with the eID center may be performed by an eID application program (that is, an eID client) of the mobile terminal. The application program may be a separate client, or may be embedded into the POS application as a plug-in. In addition, the eID application program may run in the TEE, or may run in the REE. This is not limited in this embodiment of the present invention.

Optionally, in the third or the fourth implementation of the electronic identity information, when returning the certification information to the mobile terminal, the eID center further sends the certification information to the POS center, so that when receiving the electronic identity information sent by the mobile terminal, the POS center verifies, by using the certification information sent by the eID center, authenticity of certification information sent by the mobile terminal. That is, after receiving the electronic identity information of the user, the POS center does not need to forward the electronic identity information to the eID center for verification, but directly performs verification itself.

Optionally, in this embodiment of the present invention, manners of obtaining the eID of the user include but are not limited to the following manners:
Manner 1: The eID of the user is read by the mobile terminal from the secure memory area.
   Specifically, the eID application program of the mobile terminal may read the eID from the secure memory area, or a POS application program responsible for a mobile POS registration procedure may read the eID from the secure memory area, or the POS application program triggers the eID application program to read the eID from the secure memory area.
   When the eID application program reads the eID from the secure memory area, a first module that is of the eID application program and that runs in the REE may perform an obtaining operation; or a second module that is of the eID application program and that runs in the TEE may perform the obtaining operation; or the first module instructs the second module to obtain the eID, and the second module may further return the eID to the first module.
Manner 2: The eID of the user is read by the mobile terminal by means of wireless communications from an apparatus storing the eID.

Specifically, the mobile terminal can obtain the eID of the user from a carrier of the eID by means of wireless communications. A used wireless communications manner includes but is not limited to: NFC, Bluetooth, infrared ray, Zigbee, and the like. The apparatus storing the eID is the carrier of the eID, and may be specifically another mobile terminal having a security chip, such as a smart band and a tablet computer, or may be a payment card having a security chip, such as a bank card, a stored value card, and a point card. In Manner 2, the eID of the user can be rapidly obtained. This is extremely convenient.

After obtaining the eID of the user, the eID application program may forward the eID to the POS application program, or forward an encrypted eID to the POS application program; or may encrypt the eID and then send the encrypted eID to the eID center, and after receiving certification information returned by the eID center for the eID, forward the certification information or encrypted certification information to the POS application program.

Optionally, in this embodiment of the present invention, the POS associated information further includes at least one of the business certificate information or the POS application account information.

Specifically, in addition to the bank card information, the POS associated information may further include the business certificate information because the POS center may require that the user be corresponding to a business entity. The POS center verifies, according to the business certificate information (such as business license information and/or tax registration information), whether the user complies with a corresponding regulation, for example, whether the user operates a commercial entity such as a restaurant or a store; for another example, queries, according to a business certificate of the user, whether the user defaults on a related business tax, or queries whether the commercial entity operated by the user reaches a required scale. Additional information such as the business certificate information is added to the POS associated information, so that the POS center verifies, from more aspects, whether the user has the mobile POS registration condition, and a related risk caused by blind POS function authorization is avoided.

In addition, the POS associated information may further include the POS application account. After completing the certification on the user and the mobile terminal, the POS center associates the POS application account with the mobile POS function registered by the user.

The POS application account is an account of the POS application program. The POS application program may be a POS application that accepts a financial IC card (such as a bank card), or may be a POS application that accepts an industrial IC card (such as a public transit card and a member card). Alternatively, the POS application program may be understood as a POS application that can accept different types of cards. If POS application programs are specifically classified according to different services, different types of POS application clients may be installed on the mobile phone. That is, each POS application client has one corresponding application account. Alternatively, one POS client may be installed on the mobile phone, and different types of POS plug-ins are downloaded in the POS client. These POS plug-ins are uniformly corresponding to one POS application account. Correspondingly, the POS center corresponding to the different types of POS plug-ins may store the uniform POS application account.

Optionally, in this embodiment of the present invention, before registering the mobile POS function, the mobile terminal may first register the POS application account, and register a security carrier with the security environment management platform when registering the POS application account, that is, send the identifier of the mobile phone and security carrier information (such as a hardware identifier and a memory) to the security environment management platform, so that security environment management platform manages and saves the identifier of the mobile phone and the security carrier information. When registering the mobile POS function, the mobile terminal may send the identifier of the mobile phone to the POS center (or may simultaneously send the identifier of the security environment management platform). The POS center forwards the identifier of the mobile phone to the security environment management platform, and requests the security environment management platform to determine, according to the previously saved and associated security carrier information, whether the mobile terminal meets the mobile POS registration condition. Specifically, whether security of the mobile terminal meets a requirement may be verified, or whether the mobile terminal has the function required by the mobile POS, for example, Bluetooth communication, may be verified. The identifier of the mobile terminal may be an international mobile equipment identity (International Mobile Equipment Identity, IMEI for short). The security carrier may be understood as a hardware carrier of the security environment.

The following provides detailed description wither reference to a specific application example. In the application example, a security environment is a trusted execution environment TEE; and a mobile terminal includes a POS client and an eID client, where the POS client includes a TA module running in the TEE and a client app module running in an REE, and the eID client may run in the REE, or may run in the TEE.

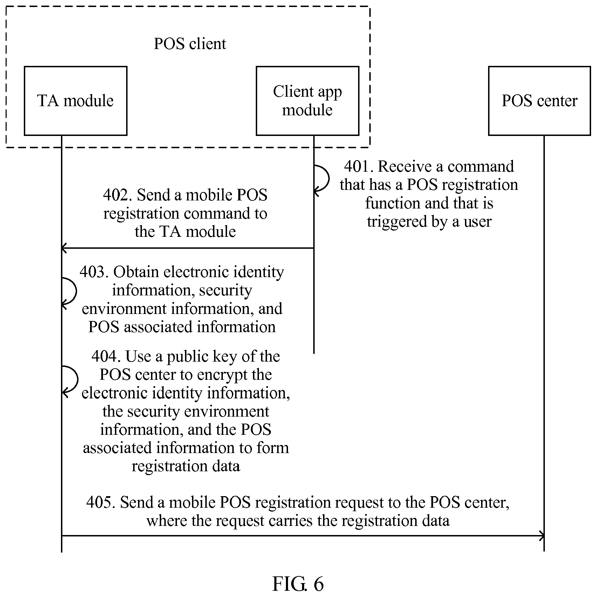

FIG. 6 is a schematic diagram of a possible implementation of sending a mobile POS registration request by a mobile terminal. The process includes the following steps:
Step 401: A client app module receives a command that has a POS registration function and that is triggered by a user.
Step 402: The client app module sends a mobile POS registration command to a TA module.
Step 403: The TA module obtains electronic identity information, security environment information, and POS associated information.
Step 404: The TA module uses a public key of a POS center to encrypt the electronic identity information, the security environment information, and the POS associated information to form registration data.
Step 405: The TA module sends a mobile POS registration request to the POS center, where the request carries the registration data.

In step 403, the TA module may request the electronic identity information from an eID client, or may obtain the electronic identity information itself. In addition, if an eID or a token (token) returned by the eID client is not encrypted, the TA module may use a key of the eID center to encrypt the eID or the token. The token is certification information.

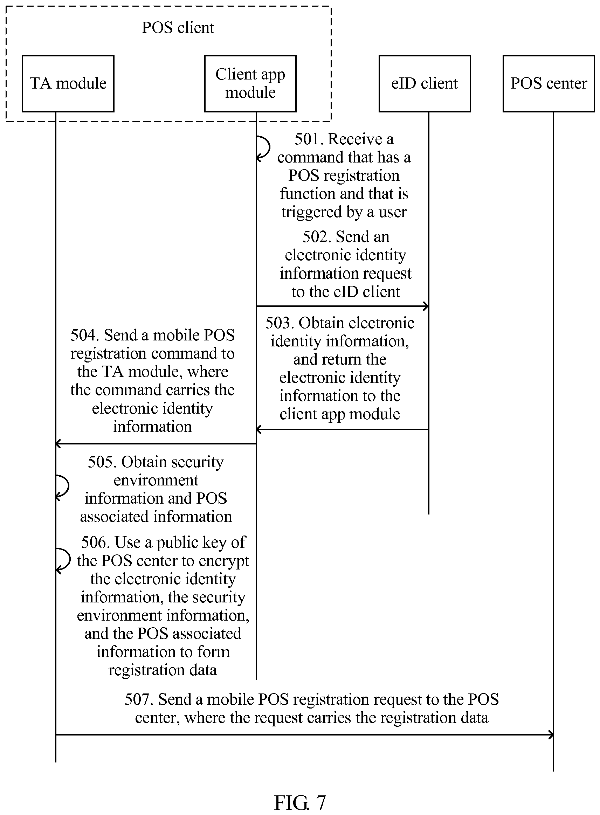

FIG. 7 is a schematic diagram of another possible implementation of sending a mobile POS registration request by a mobile terminal. The process includes the following steps:
Step 501: A client app module receives a command that has a POS registration function and that is triggered by a user.
Step 502: The client app module sends an electronic identity information request to an eID client.
Step 503: The eID client obtains electronic identity information, and returns the electronic identity information to the client app module.
Step 504: The client app module sends a mobile POS registration command to a TA module, where the command carries the electronic identity information.
Step 505: The TA module obtains security environment information and POS associated information.
Step 506: The TA module uses a public key of a POS center to encrypt the electronic identity information, the security environment information, and the POS associated information to form registration data.
Step 507: The TA module sends a mobile POS registration request to the POS center, where the request carries the registration data.

In step 503, the electronic identity information obtained by the eID client may be an eID of the user, or may be a token returned after the eID client sends the eID to an eID center for certification. In addition, after receiving the eID or the token sent by the eID client, the client app module may use a key of the eID center to encrypt the eID or the token and then send the encrypted eID or token to the TA module, or may directly send the eID or the token to the TA module. After the TA module receives the eID or the token, if the eID or the token is not encrypted, the TA module may use a key of the eID center to encrypt the eID or the token.

A variation of the solution is: The client app module obtains the POS associated information, and then sends the POS associated information to the TA module.

Another variation of the solution is: In step 504, the client app module sends a data encryption request to the TA module. After step 506, the TA module sends the registration data to the client app module. The client app module sends the mobile POS registration request carrying the registration data to the POS center.

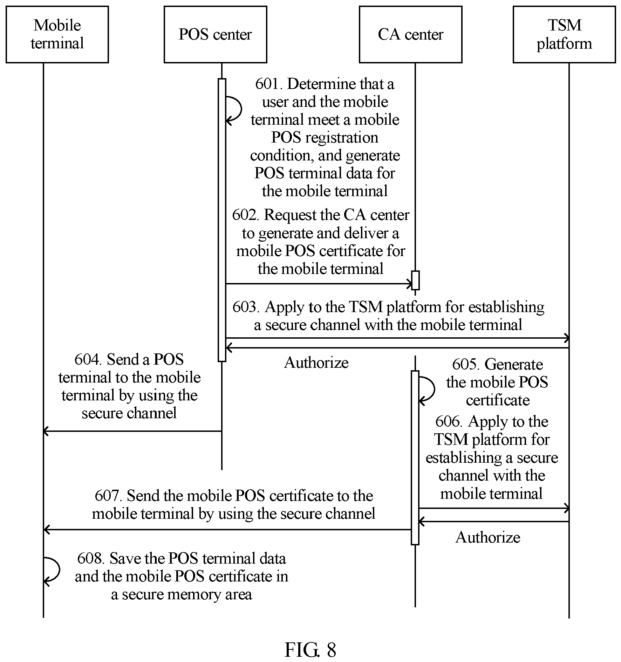

FIG. 8 is a schematic diagram of a possible manner of receiving POS data (including POS terminal data and a mobile POS certificate) by a mobile terminal. The manner includes the following steps:
Step 601: A POS center determines that a user and a mobile terminal meet a mobile POS registration condition, and generates POS terminal data for the mobile terminal.
Step 602: The POS center requests a CA center to generate and deliver a mobile POS certificate for the mobile terminal.
Step 603: The POS center applies to a TSM platform for establishing a secure channel with the mobile terminal.
Step 604: The POS center sends a POS terminal to the mobile terminal by using the secure channel.
Step 605: The CA center generates the mobile POS certificate.
Step 606: The CA center applies to the TSM platform for establishing a secure channel with the mobile terminal.
Step 607: The CA center sends the mobile POS certificate to the mobile terminal by using the secure channel.
Step 608: The mobile terminal saves the POS terminal data and the mobile POS certificate in a secure memory area.
Step 603 may be performed before step 602, may be performed together with step 602, or may be performed after step 602. Step 605 or steps 605 to 607 may be performed before step 603, or may be performed together with steps 603 and 604. In step 608, the mobile terminal may first save the POS terminal data or the mobile POS certificate, whichever is received first, in the secure memory area, or may save the two after both are received.

A variation of the solution is: After the POS center sends the POS terminal data to the mobile terminal, the mobile terminal applies to the CA center for the mobile POS certificate, and then the CA center directly sends the mobile POS certificate to the mobile terminal after generating the mobile POS certificate.

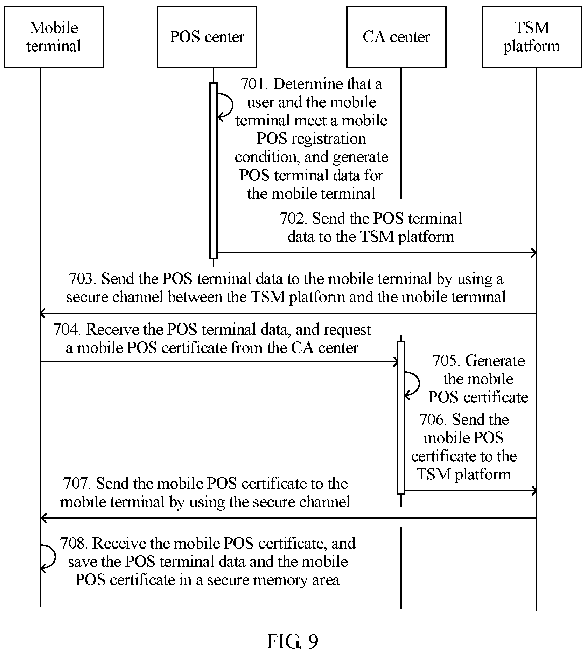

FIG. 9 is a schematic flowchart of another possible manner of receiving POS data by a mobile terminal. The manner includes the following steps:
Step 701: A POS center determines that a user and a mobile terminal meet a mobile POS registration condition, and generates POS terminal data for the mobile terminal.
Step 702: The POS center sends the POS terminal data to a TSM platform.
Step 703: The TSM platform sends the POS terminal data to the mobile terminal by using a secure channel between the TSM platform and the mobile terminal.
Step 704: The mobile terminal receives the POS terminal data, and requests a mobile POS certificate from a CA center.
Step 705: The CA center generates the mobile POS certificate.
Step 706: The CA center sends the mobile POS certificate to the TSM platform.
Step 707: The TSM platform sends the mobile POS certificate to the mobile terminal by using the secure channel.
Step 708: The mobile terminal receives the mobile POS certificate, and saves the POS terminal data and the mobile POS certificate in a secure memory area.

In step 708, the mobile terminal may first save the POS terminal data after step 704, and then save the mobile POS certificate after step 707. It should be noted that, in the solutions corresponding to FIG. 8 and FIG. 9, for the mobile terminal, the TA module may perform information transmission with the POS center and/or the CA center; or the client app module may perform the information transmission with the POS center and/or the CA center, and then after receiving the POS data, the client app client forwards the POS data to the TA module for secure storage. In addition, the solutions corresponding to FIG. 6 to FIG. 9 may be mutually combined if they do not conflict with each other.

A variation of the solution is: After sending the POS terminal data to the mobile terminal, the POS center requests the CA center to generate the mobile POS certificate for the mobile terminal, and then the CA center directly sends the mobile POS certificate to the mobile terminal after generating the mobile POS certificate.

In this embodiment of the present invention, an existing technical means may be used for a process of generating the mobile POS certificate by the CA center. That is, a terminal is requested to upload a public key of the terminal, and then a mobile POS certificate is generated according to the public key. Details are not described herein.

### Embodiment 2

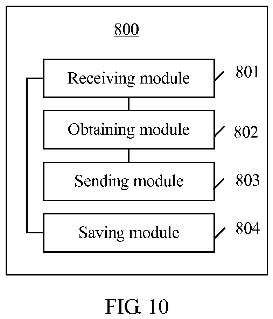

Based on a same invention conception, this embodiment of the present invention provides an apparatus 800 for registering a mobile POS. Referring to FIG. 10, the apparatus 800 includes:
a receiving module 801, configured to receive a mobile POS registration instruction;
an obtaining module 802, configured to obtain first registration data of a user, where the first registration data includes electronic identity information, security environment information of the mobile terminal, and POS associated information, and the POS associated information includes bank card information; and
a sending module 803, configured to send a mobile POS registration request to a POS center, where the request includes the first registration data or second registration data obtained after the first registration data is processed, and the first registration data or the second registration data is used by the POS center to determine whether the user and the mobile terminal meet a mobile POS registration condition.

The receiving module 801 is further configured to receive a registration response result returned by the POS center.

Optionally, in this embodiment of the present invention, the second registration data is data obtained after the mobile terminal uses a key of the POS center to encrypt the first registration data.

Optionally, in this embodiment of the present invention, the registration response result includes: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

Optionally, in this embodiment of the present invention, the receiving module 801 is further configured to: receive POS terminal data generated by the POS center, where the POS terminal data includes at least one of a POS number, merchant information, or institution information to which the POS terminal data belongs.

The apparatus further includes a saving module 804, configured to save the POS terminal data in a secure memory area of the mobile terminal.

Optionally, in this embodiment of the present invention, the receiving module 801 is further configured to receive a mobile POS certificate generated by a CA center.

The saving module 804 is further configured to save the mobile POS certificate in the secure memory area of the mobile terminal.

### Embodiment 3

Based on a same invention conception, this embodiment of the present invention provides a device for registering a mobile POS, including:
a transceiver, configured to transmit information with a POS center;
a memory, configured to store an instruction; and
a processor, separately connected to the transceiver and the memory, and configured to execute the instruction in the memory so as to perform the following steps when executing the instruction:
   receiving a mobile POS registration instruction;
   obtaining first registration data of a user, where the first registration data includes electronic identity information, security environment information of the mobile terminal, and POS associated information, and the POS associated information includes bank card information;
   instructing the transceiver to send a mobile POS registration request to the POS center, where the request includes the first registration data or second registration data obtained after the first registration data is processed, and the first registration data or the second registration data is used by the POS center to determine whether the user and the mobile terminal meet a mobile POS registration condition; and
   instructing the transceiver to receive a registration response result returned by the POS center.

Optionally, in this embodiment of the present invention, the second registration data is data obtained after the mobile terminal uses a key of the POS center to encrypt the first registration data.

Optionally, in this embodiment of the present invention, the registration response result includes: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

Optionally, in this embodiment of the present invention, before being configured to instruct the transceiver to receive the registration success message, the processor is further configured to:
instruct the transceiver to receive POS terminal data generated by the POS center, where the POS terminal data includes at least one of a POS number, merchant information, or institution information to which the POS terminal data belongs; and
save the POS terminal data in a secure memory area of the mobile terminal.

Optionally, in this embodiment of the present invention, the receiver is further configured to receive a mobile POS certificate generated by a CA center.

The processor is further configured to save the mobile POS certificate in the secure memory area of the mobile terminal.

### Embodiment 4

Based on a same invention conception, this embodiment of the present invention provides a system for registering a mobile POS, including:
a mobile terminal, configured to: receive a POS registration instruction; obtain first registration data of a user, where the first registration data includes electronic identity information, security environment information of the mobile terminal, and POS associated information, and the POS associated information includes bank card information; and send a POS registration request to a POS center, where the request includes the first registration data or second registration data obtained after the first registration data is processed; and
the POS center, configured to: determine, according to the first registration data or the second registration data, whether the user and the mobile terminal meet a POS registration condition; and send a registration response result to the mobile terminal.

The mobile terminal is further configured to receive the registration response result.

Optionally, in this embodiment of the present invention, the second registration data is data obtained after the mobile terminal uses a key of the POS center to encrypt the first registration data.

That the POS center is configured to determine, according to the second registration data, whether the user and the mobile terminal meet the POS registration condition includes:
The POS center decrypts the second registration data by using a key of the POS center to obtain the first registration data; and
the POS center determines, according to the first registration data, whether the user and the mobile terminal meet the POS registration condition.

Optionally, in this embodiment of the present invention, that the POS center is configured to determine, according to the first registration data, whether the user and the mobile terminal meet the POS registration condition includes:
The POS center sends the electronic identity information to an eID center, and receives a first verification result returned by the eID center for the electronic identity information, where the first verification result indicates that the electronic identity information is valid or invalid;
the POS center sends the security environment information to a security environment management platform, and receives a second verification result returned by the security environment management platform for the security environment information, where the second verification result indicates that the security environment information is valid or invalid; and
the POS center sends the POS associated information to an institution corresponding to the POS associated information, and receives a third verification result returned by the institution for the POS associated information, where the third verification result indicates that the POS associated information is valid or invalid.

When the first verification result indicates that the electronic identity information is valid, the second verification result indicates that the security environment information is valid, and the third verification result indicates that the POS associated information is valid, the POS center determines that the user and the mobile terminal meet the POS registration condition.

Optionally, in this embodiment of the present invention, the registration response result includes: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

Optionally, in this embodiment of the present invention, before being configured to send the registration success message to the mobile terminal, the POS center is further configured to: generate POS terminal data, where the POS terminal data includes at least one of a POS number, merchant information, or institution information to which the POS terminal data belongs; and send the POS terminal data to the mobile terminal.

The mobile terminal is further configured to: receive the POS terminal data, and save the POS terminal data in a secure memory area of the mobile terminal.

Optionally, in this embodiment of the present invention, the POS center is further configured to associate the POS terminal data with the registration data.

Optionally, in this embodiment of the present invention, that the POS center is configured to send the POS terminal data to the mobile terminal includes:
The POS center sends the POS terminal data to the mobile terminal by using a secure channel between the POS center and the mobile terminal; or the POS center sends the POS terminal data to the security environment management platform, so that the security environment management platform sends the POS terminal data to the mobile terminal.

Optionally, in this embodiment of the present invention, the system further includes:
a CA center, configured to generate a mobile POS certificate, and send the mobile POS certificate to the mobile terminal.

The mobile terminal is further configured to: receive the mobile POS certificate, and save the mobile POS certificate in the secure memory area of the mobile terminal.

Optionally, in any one of Embodiments 2 to 4 of the present invention, the security environment information of the mobile terminal includes: first data, where the first data includes at least one of a hardware identifier or a certificate.

Optionally, in any one of Embodiments 2 to 4 of the present invention, the security environment information of the mobile terminal includes first encryption data obtained by encrypting first data using a key of the security environment management platform.

The first data includes at least one of a hardware identifier or a certificate, and the security environment management platform is a platform for managing a security environment of the mobile terminal.

Optionally, in any one of Embodiments 2 to 4 of the present invention, the security environment information of the mobile terminal includes: first certification information returned by the security environment management platform for first data, where the mobile terminal sends the first data to the security environment management platform; or the security environment information of the mobile terminal includes: second certification information returned by the security environment management platform for first encryption data, where the first encryption data is obtained by encrypting first data using a key of the security environment management platform, and the mobile terminal sends the first encryption data to the security environment management platform.

The first data includes at least one of a hardware identifier or a certificate, and the security environment management platform is a platform for managing a security environment of the mobile terminal.

Optionally, in any one of Embodiments 2 to 4 of the present invention, the security environment information of the mobile terminal includes: data obtained by encrypting, using a key of the security environment management platform, first certification information that is returned by the security environment management platform for first data, where the mobile terminal sends the first data to the security environment management platform; or the security environment information of the mobile terminal includes: data obtained by encrypting, using a key of the security environment management platform, second certification information that is returned by the security environment management platform for first encryption data, where the first encryption data is obtained by encrypting first data using a key of the security environment management platform, and the mobile terminal sends the first encryption data to the security environment management platform.

The first data includes at least one of a hardware identifier or a certificate, and the security environment management platform is a platform for managing a security environment of the mobile terminal.

Optionally, in any one of Embodiments 2 to 4, the first data further includes: data obtained by performing signature processing on the hardware identifier.

With reference to any one of all the possible implementations, the POS associated information further includes: an identifier of the security environment management platform and/or an identifier of the mobile terminal, where the identifier of the security environment management platform and/or the identifier of the mobile terminal are/is used by the POS center to determine the security environment management platform.

Optionally, in any one of Embodiments 2 to 4 of the present invention, the electronic identity information includes an electronic identity eID of the user.

Optionally, in any one of Embodiments 2 to 4 of the present invention, the electronic identity information includes: second encryption data obtained by encrypting an electronic identity eID of the user by using a key of the eID center, where the eID center is a platform for managing the eID of the user.

Optionally, in any one of Embodiments 2 to 4 of the present invention, the electronic identity information includes: third certification information returned by the electronic identity eID center for an eID of the user, where the mobile terminal sends the eID of the user to the eID center; or the electronic identity information includes: fourth certification information returned by the eID center for second encryption data, where the second encryption data is obtained by encrypting an eID of the user by using a key of the eID center, and the mobile terminal sends the second encryption data to the eID center.

The eID center is a platform for managing the eID of the user.

Optionally, in any one of Embodiments 2 to 4 of the present invention, the electronic identity information includes: data obtained by encrypting, using a key of the electronic identity eID center, third certification information that is returned by the eID center for an eID of the user, where the mobile terminal sends the eID of the user to the eID center; or the electronic identity information includes: data obtained by encrypting, using a key of the eID center, fourth certification information that is returned by the eID center for second encryption data, where the second encryption data is obtained by encrypting an eID of the user by using a key of the eID center, and the mobile terminal sends the second encryption data to the eID center.

The eID center is a platform for managing the eID of the user.

Optionally, in any one of Embodiments 2 to 4 of the present invention, the eID of the user is read by the mobile terminal from the secure memory area; or the eID of the user is read by the mobile terminal by means of wireless communications from an apparatus storing the eID.

Optionally, in any one of Embodiments 2 to 4 of the present invention, the POS associated information further includes at least one of business certificate information or POS application account information.

The apparatus provided in Embodiment 2, the device provided in Embodiment 3, and the system provided in Embodiment 4 and the method provided in Embodiment 1 are two aspects based on the same invention conception. The foregoing describes an implementation process of the method in detail. Therefore, persons skilled in the art may clearly understand implementations of Embodiment 2, Embodiment 3, and Embodiment 4 according to the foregoing description. For brevity of this specification, details are not described herein again.

One or more technical solutions provided in the embodiments of the present invention have at least the following technical effects or advantages:
In the embodiments of the present invention, after receiving the mobile POS registration instruction, the mobile terminal obtains the registration data required for mobile POS registration, and sends the registration data to the POS center. After verifying that the registration data is valid and determining that the user and the mobile terminal meet the mobile POS registration condition, the POS center sends the registration success message to the mobile terminal to implement online mobile POS registration. Compared with the prior art in which a user needs to go to a POS issuance institution to apply for a mobile POS function in person, the registration method provided in the embodiments of the present invention is more convenient, simplifies user operation, and takes a shorter time. In addition, because of online registration, an applicant can freely select a time for registration, and does not have to make an application in working hours of the POS center.

In addition, in the prior art, implementations of a mobile POS are as follows: In a first implementation, a mobile terminal is connected to an external device having a POS function, such as a mobile card reader provided by Square. The external device is inserted into an audio jack of a mobile phone, so that the mobile phone has the POS function. In a second implementation, the POS issuance institution preinstalls a POS certificate in a customized mobile terminal, that is, customizes a mobile terminal having the POS function. Costs of both manners are relatively high. This becomes a main factor limiting mobile POS promotion and application. In the technical solutions provided in the embodiments of the present invention, because an online registration manner is used, a mobile terminal can be registered as a mobile POS provided that a security environment of the mobile terminal can meet a requirement of the POS center. This greatly reduces costs of the mobile POS and facilitates promotion and application of the mobile POS.

Persons skilled in the art should understand that the embodiments of the present invention may be provided as a method, a system, or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A method for registering a mobile point of sale POS, wherein the method comprises:
receiving, by a mobile terminal, a mobile POS registration instruction;
obtaining, by the mobile terminal, first registration data of a user, wherein the first registration data comprises electronic identity information, security environment information of the mobile terminal, and POS associated information, and the POS associated information comprises bank card information;
sending, by the mobile terminal, a mobile POS registration request to a POS center, wherein the request comprises the first registration data or second registration data obtained after the first registration data is processed, and the first registration data or the second registration data is used by the POS center to determine whether the user and the mobile terminal meet a mobile POS registration condition; and
receiving, by the mobile terminal, a registration response result returned by the POS center.

2. The method according to claim 1, wherein the second registration data is data obtained after the mobile terminal uses a key of the POS center to encrypt the first registration data.

3. The method according to claim 1 or 2, wherein the registration response result comprises: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

4. The method according to claim 3, before the mobile terminal receives the registration success message, further comprising:
receiving, by the mobile terminal, POS terminal data generated by the POS center, wherein the POS terminal data comprises at least one of a POS number, merchant information, or institution information to which the POS terminal data belongs; and
saving, by the mobile terminal, the POS terminal data in a secure memory area of the mobile terminal.

5. The method according to claim 4, further comprising:
receiving, by the mobile terminal, a mobile POS certificate generated by a certification authority CA center, and saving the mobile POS certificate in the secure memory area of the mobile terminal.

6. The method according to any one of claims 1 to 5, wherein:
the security environment information of the mobile terminal comprises first data, and the first data comprises at least one of a hardware identifier or a certificate.

7. The method according to any one of claims 1 to 5, wherein:
the security environment information of the mobile terminal comprises first encryption data obtained by encrypting first data using a key of a security environment management platform; wherein
the first data comprises at least one of a hardware identifier or a certificate, and the security environment management platform is a platform for managing a security environment of the mobile terminal.

8. The method according to any one of claims 1 to 5, wherein:
the security environment information of the mobile terminal comprises: first certification information returned by a security environment management platform for first data, wherein the mobile terminal sends the first data to the security environment management platform; or
the security environment information of the mobile terminal comprises: second certification information returned by a security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

9. The method according to any one of claims 1 to 5, wherein:
the security environment information of the mobile terminal comprises: data obtained by encrypting, using a key of a security environment management platform, first certification information that is returned by the security environment management platform for first data, wherein the mobile terminal sends the first data to the security environment management platform; or the security environment information of the mobile terminal comprises: data obtained by encrypting, using a key of a security environment management platform, second certification information that is returned by the security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

10. The method according to any one of claims 6 to 9, wherein the first data further comprises: data obtained by performing signature processing on the hardware identifier.

11. The method according to any one of claims 7 to 9, wherein the POS associated information further comprises: an identifier of the security environment management platform and/or an identifier of the mobile terminal, wherein the identifier of the security environment management platform and/or the identifier of the mobile terminal are/is used by the POS center to determine the security environment management platform.

12. The method according to any one of claims 1 to 11, wherein:
the electronic identity information comprises an electronic identity eID of the user.

13. The method according to any one of claims 1 to 11, wherein:
the electronic identity information comprises: second encryption data obtained by encrypting an electronic identity eID of the user by using a key of an eID center, wherein the eID center is a platform for managing the eID of the user.

14. The method according to any one of claims 1 to 11, wherein:
the electronic identity information comprises: third certification information returned by an electronic identify eID center for an eID of the user, wherein the mobile terminal sends the eID of the user to the eID center; or the electronic identity information comprises: fourth certification information returned by an eID center for second encryption data, wherein the second encryption data is obtained by encrypting an eID of the user by using a key of the eID center, and the mobile terminal sends the second encryption data to the eID center; wherein
the eID center is a platform for managing the eID of the user.

15. The method according to any one of claims 1 to 11, wherein:
the electronic identity information comprises: data obtained by encrypting, using a key of an electronic identity eID center, third certification information that is returned by the eID center for an eID of the user, wherein the mobile terminal sends the eID of the user to the eID center; or the electronic identity information comprises: data obtained by encrypting, using a key of an eID center, fourth certification information that is returned by the eID center for second encryption data, wherein the second encryption data is obtained by encrypting an eID of the user by using a key of the eID center, and the mobile terminal sends the second encryption data to the eID center; wherein
the eID center is a platform for managing the eID of the user.

16. The method according to any one of claims 12 to 15, wherein:
the eID of the user is read by the mobile terminal from the secure memory area; or the eID of the user is read by the mobile terminal by means of wireless communications from an apparatus storing the eID.

17. The method according to any one of claims 1 to 16, wherein the POS associated information further comprises at least one of business certificate information or POS application account information.

18. A method for registering a mobile POS, comprising:
receiving, by a mobile terminal, a POS registration instruction;
obtaining, by the mobile terminal, first registration data of a user, wherein the first registration data comprises electronic identity information, security environment information of the mobile terminal, and POS associated information, and the POS associated information comprises bank card information;
sending, by the mobile terminal, a POS registration request to a POS center, wherein the request comprises the first registration data or second registration data obtained after the first registration data is processed;
determining, by the POS center according to the first registration data or the second registration data, whether the user and the mobile terminal meet a POS registration condition;
sending, by the POS center, a registration response result to the mobile terminal; and
receiving, by the mobile terminal, the registration response result.

19. The method according to claim 18, wherein the second registration data is data obtained after the mobile terminal uses a key of the POS center to encrypt the first registration data; and
the determining, by the POS center according to the second registration data, whether the user and the mobile terminal meet a POS registration condition comprises:
decrypting, by the POS center, the second registration data by using a key of the POS center to obtain the first registration data; and
determining, by the POS center according to the first registration data, whether the user and the mobile terminal meet the POS registration condition.

20. The method according to claim 18 or 19, wherein the determining, by the POS center according to the first registration data, whether the user and the mobile terminal meet the POS registration condition comprises:
sending, by the POS center, the electronic identity information to an eID center, and receiving a first verification result returned by the eID center for the electronic identity information, wherein the first verification result indicates that the electronic identity information is valid or invalid;
sending, by the POS center, the security environment information to a security environment management platform, and receiving a second verification result returned by the security environment management platform for the security environment information, wherein the second verification result indicates that the security environment information is valid or invalid; and
sending, by the POS center, the POS associated information to an institution corresponding to the POS associated information, and receiving a third verification result returned by the institution for the POS associated information, wherein the third verification result indicates that the POS associated information is valid or invalid; wherein
when the first verification result indicates that the electronic identity information is valid, the second verification result indicates that the security environment information is valid, and the third verification result indicates that the POS associated information is valid, the POS center determines that the user and the mobile terminal meet the POS registration condition.

21. The method according to any one of claims 18 to 20, wherein the registration response result comprises: a registration success message sent by the POS center after the POS center determines that the user and the mobile terminal meet a mobile POS registration condition, or a registration failure message sent by the POS center after the POS center determines that the user or the mobile terminal does not meet the mobile POS registration condition.

22. The method according to claim 21, before the POS center sends the registration success message, further comprising:
generating, by the POS center, POS terminal data, wherein the POS terminal data comprises at least one of a POS number, merchant information, or institution information to which the POS terminal data belongs;
sending, by the POS center, the POS terminal data to the mobile terminal; and
receiving, by the mobile terminal, the POS terminal data, and saving the POS terminal data in a secure memory area of the mobile terminal.

23. The method according to claim 22, further comprising:
associating, by the POS center, the POS terminal data with the registration data.

24. The method according to claim 22 or 23, wherein the sending, by the POS center, the POS terminal data to the mobile terminal comprises:
sending, by the POS center, the POS terminal data to the mobile terminal by using a secure channel between the POS center and the mobile terminal; or sending, by the POS center, the POS terminal data to the security environment management platform, so that the security environment management platform sends the POS terminal data to the mobile terminal.

25. The method according to any one of claims 22 to 24, further comprising:
generating, by a CA center, a mobile POS certificate, and sending the mobile POS certificate to the mobile terminal; and
receiving, by the mobile terminal, the mobile POS certificate, and saving the mobile POS certificate in the secure memory area of the mobile terminal.

26. The method according to any one of claims 18 to 25, wherein:
the security environment information of the mobile terminal comprises first data, and the first data comprises at least one of a hardware identifier or a certificate.

27. The method according to any one of claims 18 to 25, wherein:
the security environment information of the mobile terminal comprises first encryption data obtained by encrypting first data using a key of the security environment management platform; wherein
the first data comprises at least one of a hardware identifier or a certificate, and the security environment management platform is a platform for managing a security environment of the mobile terminal.

28. The method according to any one of claims 18 to 25, wherein:
the security environment information of the mobile terminal comprises: first certification information returned by the security environment management platform for first data, wherein the mobile terminal sends the first data to the security environment management platform; or the security environment information of the mobile terminal comprises: second certification information returned by the security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

29. The method according to any one of claims 18 to 25, wherein:
the security environment information of the mobile terminal comprises: data obtained by encrypting, using a key of the security environment management platform, first certification information that is returned by the security environment management platform for first data, wherein the mobile terminal sends the first data to the security environment management platform; or the security environment information of the mobile terminal comprises: data obtained by encrypting, using a key of the security environment management platform, second certification information that is returned by the security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

30. The method according to any one of claims 26 to 29, wherein the first data further comprises: data obtained by performing signature processing on the hardware identifier.

31. The method according to any one of claims 27 to 29, wherein the POS associated information further comprises: an identifier of the security environment management platform and/or an identifier of the mobile terminal, wherein the identifier of the security environment management platform and/or the identifier of the mobile terminal are/is used by the POS center to determine the security environment management platform.

32. The method according to any one of claims 18 to 31, wherein:
the electronic identity information comprises an electronic identity eID of the user.

33. The method according to any one of claims 18 to 31, wherein:
the electronic identity information comprises: second encryption data obtained by encrypting an electronic identity eID of the user by using a key of the eID center, wherein the eID center is a platform for managing the eID of the user.

34. The method according to any one of claims 18 to 31, wherein:
the electronic identity information comprises: third certification information returned by the electronic identity eID center for an eID of the user, wherein the mobile terminal sends the eID of the user to the eID center; or the electronic identity information comprises: fourth certification information returned by the eID center for second encryption data, wherein the second encryption data is obtained by encrypting an eID of the user by using a key of the eID center, and the mobile terminal sends the second encryption data to the eID center; wherein
the eID center is a platform for managing the eID of the user.

35. The method according to any one of claims 18 to 31, wherein:
the electronic identity information comprises: data obtained by encrypting, using a key of the electronic identity eID center, third certification information that is returned by the eID center for an eID of the user, wherein the mobile terminal sends the eID of the user to the eID center; or the electronic identity information comprises: data obtained by encrypting, using a key of the eID center, fourth certification information that is returned by the eID center for second encryption data, wherein the second encryption data is obtained by encrypting an eID of the user by using a key of the eID center, and the mobile terminal sends the second encryption data to the eID center; wherein
the eID center is a platform for managing the eID of the user.

36. The method according to any one of claims 32 to 35, wherein:
the eID of the user is read by the mobile terminal from the secure memory area; or the eID of the user is read by the mobile terminal by means of wireless communications from an apparatus storing the eID.

37. The method according to any one of claims 18 to 36, wherein the POS associated information further comprises at least one of business certificate information or POS application account information.

38. An apparatus for registering a mobile POS, comprising:
a receiving module, configured to receive a mobile POS registration instruction;
an obtaining module, configured to obtain first registration data of a user, wherein the first registration data comprises electronic identity information, security environment information of the mobile terminal, and POS associated information, and the POS associated information comprises bank card information; and
a sending module, configured to send a mobile POS registration request to a POS center, wherein the request comprises the first registration data or second registration data obtained after the first registration data is processed, and the first registration data or the second registration data is used by the POS center to determine whether the user and the mobile terminal meet a mobile POS registration condition; wherein
the receiving module is further configured to receive a registration response result returned by the POS center.

39. The apparatus according to claim 38, wherein the second registration data is data obtained after the mobile terminal uses a key of the POS center to encrypt the first registration data.

40. The apparatus according to claim 38 or 39, wherein the registration response result comprises: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

41. The apparatus according to claim 40, wherein the receiving module is further configured to receive POS terminal data generated by the POS center, wherein the POS terminal data comprises at least one of a POS number, merchant information, and institution information; and
the apparatus further comprises a saving module, configured to save the POS terminal data in a secure memory area of the mobile terminal.

42. The apparatus according to claim 41, wherein the receiving module is further configured to receive a mobile POS certificate generated by a CA center; and
the saving module is further configured to save the mobile POS certificate in the secure memory area of the mobile terminal.

43. The apparatus according to any one of claims 38 to 42, wherein:
the security environment information of the mobile terminal comprises first data, and the first data comprises at least one of a hardware identifier or a certificate.

44. The apparatus according to any one of claims 38 to 42, wherein:
the security environment information of the mobile terminal comprises first encryption data obtained by encrypting first data using a key of a security environment management platform; wherein
the first data comprises at least one of a hardware identifier or a certificate, and the security environment management platform is a platform for managing a security environment of the mobile terminal.

45. The apparatus according to any one of claims 38 to 42, wherein:
the security environment information of the mobile terminal comprises: first certification information returned by a security environment management platform for first data, wherein the mobile terminal sends the first data to the security environment management platform; or the security environment information of the mobile terminal comprises: second certification information returned by a security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

46. The apparatus according to any one of claims 38 to 42, wherein:
the security environment information of the mobile terminal comprises: data obtained by encrypting, using a key of a security environment management platform, first certification information that is returned by the security environment management platform for first data, wherein the mobile terminal sends the first data to the security environment management platform; or the security environment information of the mobile terminal comprises: data obtained by encrypting, using a key of a security environment management platform, second certification information that is returned by the security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

47. The apparatus according to any one of claims 43 to 46, wherein the first data further comprises: data obtained by performing signature processing on the hardware identifier.

48. The apparatus according to any one of claims 44 to 46, wherein the POS associated information further comprises: an identifier of the security environment management platform and/or an identifier of the mobile terminal, wherein the identifier of the security environment management platform and/or the identifier of the mobile terminal are/is used by the POS center to determine the security environment management platform.

49. The apparatus according to any one of claims 38 to 48, wherein:
the electronic identity information comprises an electronic identity eID of the user.

50. The apparatus according to any one of claims 38 to 48, wherein:
the electronic identity information comprises: second encryption data obtained by encrypting an electronic identity eID of the user by using a key of an eID center, wherein the eID center is a platform for managing the eID of the user.

51. The apparatus according to any one of claims 38 to 48, wherein:
the electronic identity information comprises: third certification information returned by an electronic identity eID center for an eID of the user, wherein the mobile terminal sends the eID of the user to the eID center; or the electronic identity information comprises: fourth certification information returned by an eID center for second encryption data, wherein the second encryption data is obtained by encrypting an eID of the user by using a key of the eID center, and the mobile terminal sends the second encryption data to the eID center; wherein
the eID center is a platform for managing the eID of the user.

52. The apparatus according to any one of claims 38 to 48, wherein:
the electronic identity information comprises: data obtained by encrypting, using a key of an electronic identity eID center, third certification information that is returned by the eID center for an eID of the user, wherein the mobile terminal sends the eID of the user to the eID center; or the electronic identity information comprises: data obtained by encrypting, using a key of an eID center, fourth certification information that is returned by the eID center for second encryption data, wherein the second encryption data is obtained by encrypting an eID of the user by using a key of the eID center, and the mobile terminal sends the second encryption data to the eID center; wherein
the eID center is a platform for managing the eID of the user.

53. The apparatus according to any one of claims 49 to 52, wherein:
the eID of the user is read by the mobile terminal from the secure memory area; or the eID of the user is read by the mobile terminal by means of wireless communications from an apparatus storing the eID.

54. The apparatus according to any one of claims 38 to 53, wherein the POS associated information further comprises at least one of business certificate information or POS application account information.

55. A device for registering a mobile POS, comprising:
a transceiver, configured to transmit information with a POS center;
a memory, configured to store an instruction; and
a processor, separately connected to the transceiver and the memory, and configured to execute the instruction in the memory so as to perform the following steps when executing the instruction:
obtaining first registration data of a user, wherein the first registration data comprises electronic identity information, security environment information of the mobile terminal, and POS associated information, and the POS associated information comprises bank card information;
instructing the transceiver to send a mobile POS registration request to the POS center, wherein the request comprises the first registration data or second registration data obtained after the first registration data is processed, and the first registration data or the second registration data is used by the POS center to determine whether the user and the mobile terminal meet a mobile POS registration condition; and
instructing the transceiver to receive a registration response result returned by the POS center.

56. The device according to claim 55, wherein the second registration data is data obtained after the mobile terminal uses a key of the POS center to encrypt the first registration data.

57. The device according to claim 55 or 56, wherein the registration response result comprises: a registration success message sent by the POS center after the POS center determines that the user and the mobile terminal meet the mobile POS registration condition, or a registration failure message sent by the POS center after the POS center determines that the user or the mobile terminal does not meet the mobile POS registration condition.

58. The device according to claim 57, wherein before being configured to instruct the transceiver to receive the registration success message, the processor is further configured to:
instruct the transceiver to receive POS terminal data generated by the POS center, wherein the POS terminal data comprises at least one of a POS number, merchant information, or institution information to which the POS terminal data belongs; and
save the POS terminal data in a secure memory area of the mobile terminal.

59. The device according to claim 58, wherein the receiver is further configured to receive a mobile POS certificate generated by a CA center; and
the processor is further configured to save the mobile POS certificate in the secure memory area of the mobile terminal.

60. The device according to any one of claims 55 to 59, wherein:
the security environment information of the mobile terminal comprises first data, and the first data comprises at least one of a hardware identifier or a certificate.

61. The device according to any one of claims 55 to 59, wherein:
the security environment information of the mobile terminal comprises first encryption data obtained by encrypting first data using a key of a security environment management platform; wherein
the first data comprises at least one of a hardware identifier or a certificate, and the security environment management platform is a platform for managing a security environment of the mobile terminal.

62. The device according to any one of claims 55 to 59, wherein:
the security environment information of the mobile terminal comprises: first certification information returned by a security environment management platform for first data, wherein the mobile terminal sends the first data to the security environment management platform; or the security environment information of the mobile terminal comprises: second certification information returned by a security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

63. The device according to any one of claims 55 to 59, wherein:
the security environment information of the mobile terminal comprises: data obtained by encrypting, using a key of a security environment management platform, first certification information that is returned by the security environment management platform for first data, wherein the mobile terminal sends the first data to the security environment management platform; or the security environment information of the mobile terminal comprises: data obtained by encrypting, using a key of a security environment management platform, second certification information that is returned by the security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

64. The device according to any one of claims 60 to 63, wherein the first data further comprises: data obtained by performing signature processing on the hardware identifier.

65. The device according to any one of claims 61 to 63, wherein the POS associated information further comprises: an identifier of the security environment management platform and/or an identifier of the mobile terminal, wherein the identifier of the security environment management platform and/or the identifier of the mobile terminal are/is used by the POS center to determine the security environment management platform.

66. The device according to any one of claims 55 to 65, wherein:
the electronic identity information comprises an electronic identity eID of the user.

67. The method according to any one of claims 55 to 65, wherein:
the electronic identity information comprises: second encryption data obtained by encrypting an electronic identity eID of the user by using a key of an eID center, wherein the eID center is a platform for managing the eID of the user.

68. The device according to any one of claims 55 to 65, wherein:
the electronic identity information comprises: third certification information returned by an electronic identity eID center for an eID of the user, wherein the mobile terminal sends the eID of the user to the eID center; or the electronic identity information comprises: fourth certification information returned by an eID center for second encryption data, wherein the second encryption data is obtained by encrypting an eID of the user by using a key of the eID center, and the mobile terminal sends the second encryption data to the eID center; wherein
the eID center is a platform for managing the eID of the user.

69. The device according to any one of claims 55 to 65, wherein:
the electronic identity information comprises: data obtained by encrypting, using a key of an electronic identity eID center, third certification information that is returned by the eID center for an eID of the user, wherein the mobile terminal sends the eID of the user to the eID center; or the electronic identity information comprises: data obtained by encrypting, using a key of an eID center, fourth certification information that is returned by the eID center for second encryption data, wherein the second encryption data is obtained by encrypting an eID of the user by using a key of the eID center, and the mobile terminal sends the second encryption data to the eID center; wherein
the eID center is a platform for managing the eID of the user.

70. The device according to any one of claims 66 to 69, wherein:
the eID of the user is read by the mobile terminal from the secure memory area; or the eID of the user is read by the mobile terminal by means of wireless communications from an apparatus storing the eID.

71. The device according to any one of claims 55 to 70, wherein the POS associated information further comprises at least one of business certificate information or POS application account information.

72. A system for registering a mobile POS, comprising:
a mobile terminal, configured to: receive a POS registration instruction; obtain first registration data of a user, wherein the first registration data comprises electronic identity information, security environment information of the mobile terminal, and POS associated information, and the POS associated information comprises bank card information; and send a POS registration request to a POS center, wherein the request comprises the first registration data or second registration data obtained after the first registration data is processed; and
the POS center, configured to: determine, according to the first registration data or the second registration data, whether the user and the mobile terminal meet a POS registration condition; and send a registration response result to the mobile terminal; wherein
the mobile terminal is further configured to receive the registration response result.

73. The system according to claim 18, wherein the second registration data is data obtained after the mobile terminal uses a key of the POS center to encrypt the first registration data; and
that the POS center is configured to determine, according to the second registration data, whether the user and the mobile terminal meet the POS registration condition comprises:
the POS center decrypts the second registration data by using a key of the POS center to obtain the first registration data; and
the POS center determines, according to the first registration data, whether the user and the mobile terminal meet the POS registration condition.

74. The system according to claim 72 or 73, wherein that the POS center is configured to determine, according to the first registration data, whether the user and the mobile terminal meet the POS registration condition comprises:
the POS center sends the electronic identity information to an eID center, and receives a first verification result returned by the eID center for the electronic identity information, wherein the first verification result indicates that the electronic identity information is valid or invalid;
the POS center sends the security environment information to a security environment management platform, and receives a second verification result returned by the security environment management platform for the security environment information, wherein the second verification result indicates that the security environment information is valid or invalid; and
the POS center sends the POS associated information to an institution corresponding to the POS associated information, and receives a third verification result returned by the institution for the POS associated information, wherein the third verification result indicates that the POS associated information is valid or invalid; wherein
when the first verification result indicates that the electronic identity information is valid, the second verification result indicates that the security environment information is valid, and the third verification result indicates that the POS associated information is valid, the POS center determines that the user and the mobile terminal meet the POS registration condition.

75. The system according to any one of claims 72 to 74, wherein the registration response result comprises: a registration success message sent by the POS center after the POS center determines that the user and the mobile terminal meet a mobile POS registration condition, or a registration failure message sent by the POS center after the POS center determines that the user or the mobile terminal does not meet the mobile POS registration condition.

76. The system according to claim 75, wherein:
before being configured to send the registration success message to the mobile terminal, the POS center is further configured to: generate POS terminal data, wherein the POS terminal data comprises at least one of a POS number, merchant information, or institution information to which the POS terminal data belongs; and send the POS terminal data to the mobile terminal; and
the mobile terminal is further configured to: receive the POS terminal data, and save the POS terminal data in a secure memory area of the mobile terminal.

77. The system according to claim 76, wherein the POS center is further configured to associate the POS terminal data with the registration data.

78. The system according to claim 76 or 77, wherein that the POS center is configured to send the POS terminal data to the mobile terminal comprises:
the POS center sends the POS terminal data to the mobile terminal by using a secure channel between the POS center and the mobile terminal; or the POS center sends the POS terminal data to the security environment management platform, so that the security environment management platform sends the POS terminal data to the mobile terminal.

79. The system according to any one of claims 46 to 48, wherein the system further comprises:
a CA center, configured to generate a mobile POS certificate, and send the mobile POS certificate to the mobile terminal; and
the mobile terminal is further configured to: receive the mobile POS certificate, and save the mobile POS certificate in the secure memory area of the mobile terminal.

80. The system according to any one of claims 72 to 79, wherein:
the security environment information of the mobile terminal comprises first data, and the first data comprises at least one of a hardware identifier or a certificate.

81. The system according to any one of claims 72 to 79, wherein:
the security environment information of the mobile terminal comprises first encryption data obtained by encrypting first data using a key of the security environment management platform; wherein
the first data comprises at least one of a hardware identifier or a certificate, and the security environment management platform is a platform for managing a security environment of the mobile terminal.

82. The system according to any one of claims 72 to 79, wherein:
the security environment information of the mobile terminal comprises: first certification information returned by the security environment management platform for first data, wherein the mobile terminal sends the first data to the security environment management platform; or the security environment information of the mobile terminal comprises: second certification information returned by the security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

83. The system according to any one of claims 72 to 79, wherein:
the security environment information of the mobile terminal comprises: data obtained by encrypting, using a key of the security environment management platform, first certification information that is returned by the security environment management platform for first data, wherein the mobile terminal sends the first data to the security environment management platform; or the security environment information of the mobile terminal comprises: data obtained by encrypting, using a key of the security environment management platform, second certification information that is returned by the security environment management platform for first encryption data, wherein the first encryption data is obtained by encrypting first data using a key of the security environment management platform, and the mobile terminal sends the first encryption data to the security environment management platform; wherein
the first data comprises at least one of a hardware identifier or a certificate, and the security environment management platform is a platform for managing a security environment of the mobile terminal.

84. The system according to any one of claims 80 to 83, wherein the first data further comprises: data obtained by performing signature processing on the hardware identifier.

85. The system according to any one of claims 81 to 83, wherein the POS associated information further comprises: an identifier of the security environment management platform and/or an identifier of the mobile terminal, wherein the identifier of the security environment management platform and/or the identifier of the mobile terminal are/is used by the POS center to determine the security environment management platform.

86. The system according to any one of claims 72 to 85, wherein:
the electronic identity information comprises an electronic identity eID of the user.

87. The system according to any one of claims 72 to 85, wherein:
the electronic identity information comprises: second encryption data obtained by encrypting an electronic identity eID of the user by using a key of the eID center, wherein the eID center is a platform for managing the eID of the user.

88. The system according to any one of claims 72 to 85, wherein:
the electronic identity information comprises: third certification information returned by the electronic identity eID center for an eID of the user, wherein the mobile terminal sends the eID of the user to the eID center; or the electronic identity information comprises: fourth certification information returned by the eID center for second encryption data, wherein the second encryption data is obtained by encrypting an eID of the user by using a key of the eID center, and the mobile terminal sends the second encryption data to the eID center; wherein
the eID center is a platform for managing the eID of the user.

89. The system according to any one of claims 72 to 85, wherein:
the electronic identity information comprises: data obtained by encrypting, using a key of the electronic identity eID center, third certification information that is returned by the eID center for an eID of the user, wherein the mobile terminal sends the eID of the user to the eID center; or the electronic identity information comprises: data obtained by encrypting, using a key of the eID center, fourth certification information that is returned by the eID center for second encryption data, wherein the second encryption data is obtained by encrypting an eID of the user by using a key of the eID center, and the mobile terminal sends the second encryption data to the eID center; wherein
the eID center is a platform for managing the eID of the user.

90. The system according to any one of claims 86 to 89, wherein:
the eID of the user is read by the mobile terminal from the secure memory area; or the eID of the user is read by the mobile terminal by means of wireless communications from an apparatus storing the eID.

91. The system according to any one of claims 72 to 90, wherein the POS associated information further comprises at least one of business certificate information or POS application account information.
